# EUROPÄISCHE PATENTSCHRIFT

(11) **EP 1 417 117 B1**
(45) Veröffentlichungstag und Bekanntmachung des Hinweises auf die Patenterteilung: **28.12.2005**
(21) Anmeldenummer: 02794722.5
(22) Anmeldetag: 13.08.2002
(51) Int. Cl.: B60R 21/28

(54) **AIRBAGANORDNUNG**
AIRBAG SYSTEM
SYSTEME D'AIRBAG

(30) Priorität: 14.08.2001 DE 10139626
(43) Veröffentlichungstag der Anmeldung: 12.05.2004
(73) Patentinhaber: Takata-Petri AG, 63743 Aschaffenburg (DE)
(72) Erfinder: MAROTZKE, Thomas, 16562 Hohen-Neuendorf (DE)
(74) Vertreter: Baumgärtel, Gunnar
(86) Internationale Anmeldenummer: PCT/DE2002/002987
(87) Internationale Veröffentlichungsnummer: WO 2003/016106

(56) Entgegenhaltungen:
- EP-A- 1 112 902
- GB-A- 2 338 214
- US-A- 6 082 765
- US-A1- 2001 038 201

## Beschreibung

Die Erfindung betrifft eine Airbaganordnung.

Zum Schutz von Insassen eines Fahrzeuges sind Airbags bekannt, die sich im Falle eines Unfalls entfalten und aufblasen, um so den Aufprall eines Insassen abzumildern.

Bei bekannten Airbags besteht das Problem, das diese sich bei einem Unfall explosionsartig entfalten müssen, um die Sollbruchstellen zu öffnen und die Insassen rechtzeitig schützen zu können. Für Insassen, die angeschnallt sind und die richtige Distanz zum Airbag bewahren, bietet dieser dann wirksamen Schutz. Nicht jedoch für Insassen, die "out of position" (im nachfolgenden als OOP bezeichnet) sitzen und beim Auslösen dem Airbag beispielsweise zu nahe sind oder auf andere Art ungünstig plaziert sind. Schwere Verletzungen bis hin zum Schädel- oder Genickbruch können die Folge sein. Besonders gefährdet sind Kleinkinder in so genannten Reboard-Kindersitzen, die entgegen der Fahrtrichtung montiert werden. Die National Highway Traffic Safety Administration hat für die USA errechnet, dass auf 1000 Menschen, denen ein Airbag das Leben gerettet hat, 57 kommen, die ohne den vermeintlichen Schutz noch leben würden.

Aus der GB2338214 A ist eine Aibaganordnung bekannt mit einem Airbag ; einem Gasgenerator zum Erzeugen von Gas zum Aufblasen des Airbags; einem Gehäuse zur Aufnahme des Airbags und des Gasgenerators;
mindestens einer Abströmöffnung in dem Gehäuse zum Ableiten von Gas aus der Airbaganordnung; mindestens einer Durchtrittsöffnung in dem Zylindergehäuse, durch welche durch den Gasgenerator erzeugtes Gas in den Airbag gelangen kann; einer Schließvorrichtung, die verstellbar ist zwischen einer Öffnungsstellung, in der die Abströmöffnung und die Durchtrittsöffhung geöffnet sind, und einer Schließstellung, in der die Abströmöffnung geschlossen und die Durchtrittsöffnung geöffnet ist, und einer Motor, die die Schließvorrichtung im Ruhezustand in der Öffnungsstellung haltet, wobei bei Aktivierung der Airbaganordnung bei einem Unfall in Abwesenheit einer OOP- Situation die Schließvorrichtung in die Schließstellung übergeht.

Die vorliegende Erfindung hat zur Aufgabe, diese Problematik zumindest abzumindern. Diese Aufgabe wird durch die in den unabhängigen Ansprüchen angegebene Erfindung gelöst. Vorteilhafte Ausgestaltungen der Erfindung sind den Unteransprüchen zu entnehmen.

Da unter OOP-Bedingungen (z.B. kein Abstand zwischen Airbagmodul und Fahrzeuginsasse) wie geschildert die Gefahr besteht, dass die Energie des den Luftsack aufblasenden Gasgenerators den Insassen gefährlich verletzen kann, ist es sinnvoll, in einer OOP-Situation das Gas des Gasgenerators vom Insassen fernzuhalten. Hierzu gibt es verschiedene Lösungsansätze. Ein erster Lösungsansatz ist die Steuerung einer Abströmöffnung derart, dass diese in einer OOP-Situation geöffnet, und in einer "in position"-Situation geschlossen ist. Bei der Abströmöffnung kann es sich um eine Abströmöffnung mit steuerbarem Querschnitt handeln, oder auch um mehrere separate Abströmöffnungen, von denen mindestens einer für den "in position"-Fall vorgesehen ist, und die übrigen nur im OOP-Fall wirksam (geöffnet) werden.

Insbesondere gibt es die Ansätze "öffnend" und "schliessend". Im "öffnenden" Ansatz ist die Abströmöffnung geschlossen und wird im Falle einer OOP-Situation geöffnet. Dazu ist Sensorik im Fahrzeug vorgesehen, die bei Erkennen einer OOP-Situation ein Öffnen der Abströöffnung so schnell wie möglich bewirkt. Dieser Ansatz hat den Vorteil, dass keine Gasverluste während des Aufblasevorganges im "in position"-Fall auftreten. Andererseits hat dieser Ansatz den Nachteil, dass das Öffnen der Abströmöffnung Zeit beansprucht. Besser ist es darum, wenn die Abströmöffnung von Anfang an geöffnet ist.

Beim "schliessenden" Ansatz ist die Abströmöffnung immer geöffnet. Das Airbagmodul ist somit ständig auf eine OOP-Situation eingestellet. Bei Vorliegen einer "in position" Situation steht dann zum Schliessen der Abströmöffnung und zum vollständigen Aufblasen des Airbags jene Zeit zur Verfügung, die zwischen Auslösen des Airbags und Eintauchen des Fahrzeuginsassen in den Airbag vergeht. Messungen haben ergeben, dass dies auf der Fahrerseite etwa 40 ms entspricht. Die Erfindung beruht auf der Erkenntnis, dass diese Zeitspanne in der Regel ausreicht und der "schliessende" Ansatz gegenüber dem "öffnenden" Ansatz im Vorteil ist.

Insbesondere ist die Abströmöffnung unabhängig von einer Sensorik sofort wirksam. Ausserdem sind anfängliche Gasverluste je nach Ausgestaltung der Airbaganordnung durch den "Venturieeffekt" (dem Ansaugen von Nebenluft) kompensierbar.

Ein weiterer Ansatz basiert auf der Verzögerung der maximalen Luftsackausdehnung in Gegenwart eines Hindernisses (Fahrzeuginsasse). Dies ist beispielsweise mittels Fangbänder realisierbar. Die Streckung vorhandener Fangbänder in Gegenwart des Hindernisses erfolgt sehr spät und wird als Signal zur Steuerung der Abströmöffnung genutzt.

Insbesondere lässt sich eine Steuerung der Abströmöffnung mittel eines Steuerschiebers mit Vorteil realisieren. Ein solcher Steuerschieber kann so ausgebildet sein, dass dieser bei Zündung des Gasgenerators durch das von dem Gasgenerator erzeugt Gas beaufschlagt wird, dadurch den Gasstrom teilt, und einen Teil des Gasstromes unter die Instrumententafel (IT) und einen anderen Teil in den Luftsack leitet. Die Antriebskraft für die Steuerschieberbewegung wird folglich vom Gasgenerator zur Verfügung gestellt.

Bei Verwendung eines Steuerschiebers gibt es mehrere Szenarien. In einem ersten Szenario ist der Steuerschieber in der Ausgangslage zur Instrumententafel hin offen und zum Luftsack geschlossen. Der Steuerschieber ist verriegelt und kann durch einen separat ansteuerbaren Mechanismus entriegelt werden. Nach Entriegelung verfährt der Steuerschieber in seine Endlage, gibt den Gasstrom in den Luftsack frei und verschliesst die Abströmöffnung in Richtung Instrumententafel.

In einem zweiten Szenario sind Abströmöffnungen zum Luftsack bzw. unter die Instrumenttafel in der Ausgangslage des Steuerschiebers teilweise geöffnet. Der Gasstrom wird in der Ausgangslage in beide Richtungen gesteuert. Wird der Steuerschieber nicht entriegelt, so geht ein Teil des Luftstromes unter die Instrumententafel verloren. Die Aufblaseleistung des Gasgenerators wird somit reduziert ("low onset"). Die Schieberbewegung wird gesteuert entriegelt über einen separat ansteuerbaren Mechanismus. Dieser Mechanismus kann beispielsweise mittels Streckung eines Fangbandes angesteuert werden, oder über Deformationselemente, die den Steuerschieber abstützen und sich "allmählich" deformieren oder deformiert werden. Durch verschiedene End- und Ausgangslagen ist eine Stufung der in den Luftsack geführten Generatorleistung möglich.

In einem dritten Szenario wird in einer OOP-Situation nur die erste Stufe eines Gasgenerators gezündet. Anschliessend wird der Steuerschieber entriegelt. Bei Zündung der zweiten Stufe wird die Abströmöffnung zum Luftsack verschlossen, und eine Abströmöffnung in Richtung Instrumententafel geöffnet. Das Gas der zweiten Stufe wird somit fast vollständig vom Insassen ferngehalten und unter die Instrumententafel geblasen (Entsorgungszündung).

In einem vierten Szenarion wird der im Druckraum der Airbaganordnung herrschende Überdruck genutzt, um beispielsweise einen Knieairbag über einen separaten Gaskanal aufzublasen, wobei die Überströmöffnung nach dem Befüllen des zweiten Luftsackes verschlossen wird.

Weiterhin können statt eines öffnenden Steuerschiebers auch ein Gewebeschlauch, eine Klappe, oder ein schliessender Schieber in Kombination mit Fangbändern verwendet werden. Beispielsweise können in einem vorzugsweise zylindrischen Teil des Modulgehäuses Abströmöffnungen vorgesehen sein. Am Boden des zylindrischen Abschnittes ist in der Ausgangslage ein lampionartiger gefalteter Gewebeschlauch befestigt. Der gefaltete Zustand wird durch Reissnähte, Verklebung o.ä. aufrechterhalten. Mit dem Luftsack ist der Gewebeschlauch mit Fangbändern verbunden. In Abhängigkeit von der Ausdehung des Luftsackes wird der Gewebschlauch gestreckt und vor die Abströmöffnungen gezogen, die dadurch veschlossen werden.

Alternativ können die eine oder mehrere Abströmöffnungen auch durch einen Schieber oder eine Klappe verschlossen werden.

Erfindungsgemäss ist nun eine Airbaganordnung geschaffen, mit einem Airbag; einem Gasgenerator zum Erzeugen von Gas zum Aufblasen des Airbags; einem Gehäuse zur Aufnahme des Airbags und/oder zumindest eines Teiles des Gasgenerators; mindestens einer Abströmöffnung in dem Gehäuse zum Ableiten von Gas aus der Airbaganordnung; und einer Schliessvorrichtung, die verstellbar ist zwischen einer Öffnungsstellung, in der die Abströmöffnung geöffnet ist, und einer Schliessstellung, in der die Abströmöffnung geschlossen ist, wobei die Schliessvorrichtung im Ruhezustand der Airbaganordnung in der Öffnungsstellung ist.

Die erfindungsgemässe Airbaganordnung hat den Vorteil, dass im Ruhezustand, d.h. vor Aktivierung des Airbags durch ein entsprechendes Sensorsignal bei einem Unfall, eine Abströmöffnung offengelegt ist, durch die bei Aktivierung der Airbaganlage (also bei einem Unfall) durch den Gasgenerator erzeugtes Gas grundsätzlich abströmen kann. Liegt eine "out of position"-Situation vor (im folgenden OOP-Situation genannt), so bleibt die Abströmöffnung offen (d.h. die Schliessvorrichtung verbleibt in der Öffnungsstellung), und ein (vollständiges) Aufblasen des Airbags wird verhindert. Dadurch wird der OOP-Insasse vor Verletzungen durch ein explosionsartiges Entfalten des Airbags bewahrt.

Umgekehrt geht die Schliessvorrichtung bei Aktivierung der Airbaganordnung in Abwesenheit einer OOP-Situation in die Schliessstellung über. In der Schliessstellung ist die Abströmöffnung geschlossen und das durch den Gasgenerator erzeugte Gas strömt vollständig in den Airbag und bläst diesen ordnungsgemäss auf.

Die Erfindung macht sich die überraschende Erkenntnis zunutze, dass für einen Übergang von einem Zustand, in dem der Airbag nicht oder nur gebremst aufgeblasen wird (Öffnungsstellung der Schliessvorrichtung), in einen Zustand, in dem der Airbag ordnungsgemäss aufgeblasen wird (Schliessstellung der Schliessvorrichtung) mehr Zeit zur Verfügung steht, als umgekehrt. Mit anderen Worten ist mehr Zeit dafür vorhanden, die Schliessvorrichtung von der Öffnungsstellung in die Schliessstellung übergehen zu lassen, als umgekehrt. Der Grund dafür liegt darin, dass die grösste Verletzungsgefahr für den Fahrzeuginsassen in einer OOP-Situation zu Beginn der Airbagentfaltung besteht, das heisst während der anfänglichen explosionsartigen Ausdehnung des Airbags. Umgekehrt ist vergleichsweise mehr Zeit vorhanden, den Airbag im "in position"-Fall (also in Abwesenheit einer OOP-Situation) ausreichend aufzublasen, um einen optimalen Insassenschutz zu gewährleisten. Aus diesem Grund ist die Schliessvorrichtung erfindungsgemäss im Ruhezustand der Airbaganordnung in der Öffnungsstellung, und nicht in der Schliessstellung.

In einer Ausgestaltung der Erfindung weist die Airbaganordnung eine lösbaren Verriegelung auf, die die Schliessvorrichtung im Ruhezustand in der Öffnungsstellung lösbar verriegelt. Die lösbare Verriegelung ist dabei mit einer Auslösevorrichtung gekoppelt, die bei Aktivierung der Airbaganordnung in Abwesenheit einer OOP-Situation ein Lösen der Verriegelung bewirkt. Unter Aktivierung der Airbaganordnung wird, wie bereits oben angedeutet, die Unfallsituation angesprochen, in der der Airbag im Idealfall (d.h. im "in position" Fall) zum Schutze des Insassen voll entfaltet werden soll.

Die Auslösevorrichtung kann beispielsweise zum Empfang eines Auslösesignals von einem Sensor, der zur Detektion einer OOP-Situation ausgebildet ist, welches dieser bei Aktivierung der Airbaganordnung in Abwesenheit einer OOP-Situation erzeugt. Sensoren zur Detektion einer OOP-Situation sind an sich bekannt. Im Zusammenhang mit der Erfindung wird das Ausgangssignal eines solchen Sensors durch die Auslösevorrichtung zusammen mit einem Airbagaktivierungssignal so verarbeitet, dass im "in position"-Fall der Airbag vollständig entfaltet wird. Dazu wird die Schliessvorrichtung entriegelt, so dass diese von der Öffnungsstellung in die Schliessstellung übergehen kann, und damit einem weiteren Abströmen von durch den Gasgenerator erzeugtes Gas über die Abströmöffnung entgegenwirkt.

In einer Ausgestaltung ist die Auslösevorrichtung durch ein Zugband gebildet, das bei ordnungsgemässer Entfaltung des Airbags eine Zugkraft auf die lösbare Verriegelung ausübt, die ein Lösen der Verriegelung bewirkt. Unter ordnungsgemässen Entfalten des Airbags ist der Fall gemeint, in dem eine freie Entfaltung nicht durch einen OOP-Insassen behindert wird. In einem solchen Fall kann sich eine beispielsweise an der Airbaginnenseite einerseits und der Verriegelung andererseits befestigtes Zugband straffen und somit die erwähnte Zugkraft aufbringen. Im umgekehrten Fall, wenn beispielsweise ein Insasse zu dicht am sich entfaltenden Airbag positioniert ist (OOP), kann eine solche Straffung nicht stattfinden, da die Airbagentfaltung durch den Insassen blockiert wird. Als Folge davon wird durch das Zugband nicht die zum Lösen der Verriegelung notwendige Zugkraft aufgebracht. Diese Ausgestaltung hat den Vorteil, dass keine elektrische Signalverarbeitung notwendig ist und die Airbageinheit daher einer höhere Robustheit mit dem damit zusammenhängenden geringeren Wartungsaufwand aufweist.

In einer Ausgestaltung wirkt die lösbare Verriegelung einer auf die Schliessvorrichtung wirkenden Vorspannkraft entgegen, durch die die Schliessvorrichtung nach Entriegelung von der Öffnungsstellung in die Schliessstellung bewegt wird. Diese Vorspannkraft kann beispielsweise durch eine mit der Schliessvorrichtung gekoppelten Feder erzeugt werden. Auch diese Ausgestaltung hat den Vorteil der Robustheit.

In einer anderen Ausgestaltung ist die Verriegelung durch ein Deformationselement gebildet, dessen Deformation elektrisch steuerbar ist, und das zum Empfang eines Steuersignals von einer Steuereinheit ausgebildet ist, welches diese bei Aktivierung der Airbaganordnung in Abwesenheit einer OOP-Situation erzeugt, wobei das Deformationselement nach Empfang des Steuersignals durch Deformation eine Bewegung der Schliessvorrichtung von der Öffnungsstellung in die Schliessstellung zulässt bzw. bewirkt. Beispielsweise kann das Deformationselement als Biegeblech ausgebildet ist. Diese Ausgestaltung hat den Vorteil, dass sich mit der elektrischen Steuerung der Deformation des Deformationselementes gleichzeitig die Bewegung der Schliessvorrichtung von der Öffnungsstellung in die Schliessstellung steuern lässt. Damit können beispielsweise verschiedene Arten von OOP-Situationen berücksichtigt, und die Bewegung (Geschwindigkeit, Beschleunigung) der Schliessvorrichtung dementsprechend eingestellt werden. Auch kann die Öffnungs- bzw. Schliessstellung je nach Situation angepasst werden. Die Schliessvorrichtung kann auch in dieser Ausgestaltung vorgespannt sein, wobei das Deformationselement der Vorspannkraft entgegenwirkt. Alternativ kann die Schliessvorrichtung mit dem Deformationselement gekoppelt sein, so dass eine Deformation des Deformationselementes eine Positionsveränderung der Schliessvorrichtung bewirkt.

In einer Ausgestaltung der Airbaganordnung ist die Schliessvorrichtung durch einen entlang einer Längsachse des Gehäuses zwischen der Öffnungsstellung und der Schliessstellung verschieblichen Steuerkolben gebildet, dessen Wandung eine erste Aussparung aufweist, die in der Öffnungsstellung über der Abströmöffnung zu liegen kommt, so dass bei Aktivierung der Airbaganordnung und dem Vorliegen einer OOP-Situation vom Gasgenerator erzeugtes Gas über die erste Aussparung und die Abströmöffnung aus der Airbaganordnung austritt. Auch diese Ausgestaltung zeichnet sich durch eine einfache Konstruktion und damit Robustheit aus.

Optional sind Mittel vorgesehen, die den Steuerkolben oder Steuerschieber nach Verschieben in die Endlage (Schliessstellung) darin fixieren. Beispielsweise kann der Innenraum des Gehäuses, in welchem der Steuerkolben verschieblich gelagert ist, sich in Richtung zur Schliessstellung verjüngen, so das sich der Steuerkolben beim Übergang von der Ruhelage in die Endlage darin verkeilt, und nicht wieder in die Ruhelage zurückkehren kann.

Das Gehäuse der Airbaganordnung weist vorzugsweise eine Vorkammer auf, zur zumindest teilweisen Aufnahme des Gasgenerators, und eine Airbagkammer zur Aufnahme des Airbags im zusammengefalteten Zustand, wobei die Vorkammer und die Airbagkammer mittels einer Durchtrittsöffnung verbunden sind, durch welche durch den Gasgenerator erzeugtes Gas von der Vorkammer in die Airbagkammer gelangen kann, und wobei die Schliessvorrichtung die Durchtrittsöffnung in der Öffnungsstellung zumindest teilweise verschliesst, und in der Schliessstellung im wesentlichen freigibt. Im Ruhezustand ist die Durchtrittsöffnung je nach Ausgestaltung geschlossen oder nur teilweise offen. Ist die Auslösevorrichtung beispielsweise durch ein Zugband gebildet (siehe oben), so ist die Durchtrittsöffnung im Ruhezustand teilweise offen, so dass bei Aktivierung der Airbaganordnung durch (entsprechend gebremstes) Aufblasen des Airbags in Abwesenheit einer OOP-Situation eine Straffung des Zugbandes erreicht wird. Ist die Auslösevorrichtung an einen OOP-Sensor gekoppelt, so kann die Durchtrittsöffnung im Ruhezustand komplett geschlossen sein.

Vorzugsweise weist der Steuerschieber eine zweite Aussparung auf, die in der Schliessstellung über der Durchtrittsöffnung zu liegen kommt, so dass bei Aktivierung der Airbaganordnung und der Abwesenheit einer OOP-Situation vom Gasgenerator erzeugtes Gas über die zweite Aussparung und die Durchtrittsöffnung in die Airbagkammer eintritt und der Airbag ordnungsgemäss aufgeblasen wird. Somit ist das Zusammenspiel des Öffnens bzw. Schliessens der Abström- und Durchtrittsöffnungen durch geeignete Konstruktion des Steuerschiebers beliebig vorbestimmbar.

In einer Ausgestaltung liegen sich die Abströmöffnung und die Durchtrittsöffnung, als auch die erste und die zweite Aussparung jeweils gegenüber. Darüber hinaus können die Abströmöffnung und die Durchtrittsöffnung, als auch die erste und die zweite Aussparung jeweils entlang der Verschiebeachse des Steuerschiebers zueinander versetzt sein.

In einer bevorzugten Ausgestaltung weist der Steuerschieber einen im wesentlichen senkrecht zu dessen Verschieberichtung verlaufenden Vorsprung auf, der eine Angriffsfläche für durch den Gasgenerator erzeugtes Gas bildet, wodurch bei Aktivierung der Airbaganordnung eine Verschiebekraft in Richtung zur Schliessstellung auf den Steuerschieber ausgeübt wird. Somit wird der durch das erzeugte Gas entstehende Druck in vorteilhafter Weise ausgenutzt, um die Schliessvorrichtung in Bewegung zu versetzen.

Beispielsweise ist die Vorkammer im wesentlichen zylindrisch, wobei der Steuerschieber durch einen zylindrischen Kolben gebildet ist, der durch die Vorkammer entlang deren Längsachse gleitend geführt ist. In diesem Fall ist der Vorsprung vorzugsweise ringförmig ist und weist in den Innenraum des Kolbens.

Darüber hinaus kann der Steuerschieber mit einem Deformationselement gekoppelt sein, das sich bei Verschiebung des Steuerschiebers deformiert, um dadurch die Verschiebungsgeschwindigkeit und/oder Verschiebungsbeschleunigung des Steuerschiebers zu steuern. Anstatt eines Deformationselementes kann auch eine Feder verwendet werden. Das Deformationselement bzw. die Feder bewirkt weiterhin, dass der Steuerschieber in der Öffnungsstellung vorgespannt ist.

In einer weiteren Ausgestaltung ist die lösbare Verriegelung durch einen durch die Aussenwände der Vorkammer und des Steuerschiebers verlaufenden Stift gebildet, der den Steuerschieber relativ zur Vorkammer in der Öffnungsstellung fixiert. Diese Ausgestaltung hat wiederum den Vorteil einer einfachen Konstruktion und Robustheit.

In einer Ausgestaltung der Erfindung ist die Schliessvorrichtung mit einem Zugband gekoppelt ist, das mit dem Airbag verbunden ist, wobei bei einem ordnungsgemässen Aufblasen des Airbags das Zugband gestrafft und durch das Zugband eine Zugkraft auf die Schliessvorrichtung ausgeübt wird, durch welche die Schliessvorrichtung von der Öffnungsstellung in die Schliessstellung bewegt wird. Ordnungsgemässes Aufblasen heisst, wie bereits oben angedeutet, ungehindertes Aufblasen ohne Behinderung durch einen zu dicht am sich aufblasenden Airbag plazierten Fahrzeuginsassen. Wird das Aufblasen behindert, so wird das Zugband, das beispielsweise an der Innenseite des Airbags einerseits, und andererseits an der Schliessvorrichtung befestigt ist, nicht gestrafft und übt somit keine Zugkraft auf die Schliessvorrichtung aus. Demzufolge verbleibt die Schliessvorrichtung in der Öffnungsstellung und ein vollständiges Aufblasen des Airbags wird zum Schutz des OOP-Fahrzeuginsassen verhindert.

Ein Vorteil dieser Ausgestaltung ist, dass die Steuerung der "Aufblasestärke" in Abhängigkeit von dem Vorliegen einer OOP-Situation rein mechanisch erfolgt, was eine einfachen und robusten Aufbau der Airbaganordnung ermöglicht

Insbesondere kann in dieser Ausgestaltung das Gehäuse eine Vorkammer zur Aufnahme zumindest eines Teiles des Gasgenerators und eine mit der Vorkammer verbundene Airbagkammer zur Aufnahme des gefalteten Airbags aufweisen, wobei die Schliessvorrichtung als Schiebeelement ausgebildet ist, das in der Vorkammer in Richtung der Zugkraft verschiebbar geführt ist. Durch die Verbindung der Vorkammer mit der Airbagkammer ist gewährleistet, dass von dem Gasgenerator erzeugtes Gas auch in der Öffnungsstellung der Schliessvorrichtung in die Airbagkammer strömt, wobei der Airbag im zusammengefalteten Zustand so in der Airbagkammer untergebracht ist, das in die Airbagkammer strömendes Gas in den Airbag gelangt und somit den Airbag aufbläst. Da jedoch im Ruhezustand die Abströmöffnung freigelegt ist, strömt bei Aktivierung der Airbaganordnung anfänglich ein Teil des Gases über die Abströmöffnung ab, während nur der verbleibende Teil des Gases in die Airbagkammer strömt. Dadurch entfaltet sich der Airbag anfänglich langsamer, als herkömmliche Airbags. Erst wenn das Zugband gestrafft ist, wozu es nur kommt, wenn der Entfaltung des Airbags nichts im Wege steht (d.h. kein OOP-Insasse), wird die Entfaltung dadurch beschleunigt, dass das Zugband die Schliessvorrichtung in Entfaltungsrichtung über die Abströmöffnung zieht, so dass das erzeugte Gas nun vollständig in den Airbag strömt und dieser sich vollständig entfaltet.

Wie bereits oben erwähnt wurde herausgefunden, dass diese anfängliche Verzögerung der rechtzeitigen vollständigen Entfaltung des Airbags zum optimalen Schutz eines Insassen im "in position Fall" nicht im Wege steht.

In einer Ausgestaltung der erfindungsgemässen Airbaganordnung ist die Vorkammer im wesentlichen kastenförmig ist und die Abströmöffnung in einer zur Zugkraftrichtung parallel verlaufenden Wand der Vorkammer gebildet, wobei das Schiebeelement eine Abdeckplatte aufweist, die die Abströmöffnung in der Schliessstellung abdeckt. Insbesondere kann das Schiebeelement zwei zueinander parallel verlaufende Abdeckplatten aufweisen, die über zwei Bügel miteinander verbunden sind, wobei das Zugseil an den Bügeln befestigt ist. Diese Ausgestaltung ermöglicht eine besonders einfache Konstruktion der Airbaganordnung.

In einer bevorzugten Ausgestaltung der Erfindung ist an der Verbindungsstelle der Vorkammer und der Airbagkammer ein Diffusor vorgesehen, der von der Vorkammer in die Airbagkammer strömendes Gas seitlich in den Airbag ablenkt. Dadurch wird die frontal auf einen Fahrzeuginsassen wirkende explosionsartige Entfaltung des Airbags weiter abgemindert, da das in die Airbagkammer strömende Gas durch den Diffusor in die bzgl. der Achse Airbaganordnung-"in position"-Fahrzeuginsasse seitlichen Bereiche des Airbags abgelenkt wird. In Kombination mit der Steuerung der Aufblasstärke mittels der Schliessvorrichtung wird damit eine besonders kontrollierte Entfaltung des Airbags sowohl im "in position"- als auch im OOP-Fall gewährleistet.

Mit Vorteil weist der Diffusor Haltebleche auf, mittels derer der Airbag am Gehäuse befestigt ist. Insbesondere kann der Diffusor eine Diffusorplatte aufweisen, die im wesentlichen parallel zu den Halteblechen und zu diesen entlang der Zugkraftrichtung versetzt verläuft. Diese Ausgestaltung hat den Vorteil, dass durch ein einziges Bauteil eine Halterung des Airbags sowie ein Diffusor bereitgestellt werden, was den Aufbau der Airbaganordnung vereinfacht und somit die Herstellungskosten reduziert.

In einer weiteren Ausgestaltung der Erfindung weist das Gehäuse eine Vorkammer zur Aufnahme zumindest eines Teiles des Gasgenerators und eine mit der Vorkammer verbundene Airbagkammer zur Aufnahme des gefalteten Airbags aufweist, wobei die Schliessvorrichtung als faltbarer Gewebeschlauch ausgebildet ist, der in der Öffnungsstellung zusammengefaltet ist, und der durch die Zugkraft entfaltbar ist, um dadurch in die Schliessstellung überzugehen. Die Verwendung eines faltbaren Gewebeschlauches führt zu einer Gewichtsreduktion sowie Platzersparnis, was insbesondere bei Airbaganordnungen von Vorteil ist, bei denen die Einbaugrösse beschränkt ist.

Der Gewebeschlauch und die Vorkammer können in dieser Ausgestaltung zylinderförmig sein. Dadurch wird der Herstellung insbesondere des Gewebeschlauches vereinfacht.

Der Gewebeschlauch wird vorzugsweise durch eine oder mehrere Reissleinen im gefalteten Zustand gehalten, und die Reissleinen bei Überschreiten der Zugkraft eines vorbestimmten Wertes reissen und den Gewebeschlauch zur Entfaltung freigeben. Dadurch wird zusätzlich sichergestellt, dass der Gewebeschlauch im Ruhezustand in der Öffnungsstellung verbleibt und nur bei einer vorbestimmbaren Zugkraft in die Schliessstellung übergeht. Dies vereinfacht die Anpassbarkeit der Airbaganordnung an die verschiedenen Anforderungen für verschiedene Airbagtypen, bei denen ein Übergang von der Öffnungsstellung in die Schliessstellung bei unterschiedlichen Schwellwerten notwendig sein kann.

Die Abströmöffnung verläuft vorzugsweise parallel zur Entfaltungsrichtung des Gewebeschlauches in der Aussenwand der Vorkammer und wird durch Entfaltung des Gewebeschlauches abgedeckt. Dies ergibt einen besonders einfachen und platzsparenden Aufbau der Airbaganordnung.

Erfindungsgemäss wird weiterehin eine Airbaganordnung geschaffen, mit einem Airbag; einem Gasgenerator zum Erzeugen von Gas; einer Zufuhr für das durch den Gasgenerator erzeugte Gas in den Airbag; einer Auslöseneinrichtung zur Aktivierung des Gasgenerators bei einem Unfall; und einer Steuerungseinrichtung zur kontrollierten Steigerung der Entfaltbarkeit des Airbags in Abhängigkeit von der Positionierung eines Fahrzeuginsassen, nach Aktivierung des Gasgenerators.

Eine Steigerung der Entfaltbarkeit des Airbags kann einerseits durch Steuerung des Aufblasevorganges, und andererseits durch eine Steuerung der räumlichen Entfaltung des Aibags realisiert werden.

In einer Ausgestaltung wird die Steigerung der Entfaltbarkeit durch eine Steigerung der Gaszufuhr in den Airbag erreicht. Durch Steigerung der Gaszufuhr in den Airbag kann dessen vollständiges Aufblasen erreicht werden. Dies geschieht allerdings in Abhängigkeit von der Position eines Fahrzeuginsassen, so dass in einem OOP-Fall keine oder eine nur begrenzte Steigerung der Gaszufuhr stattfindet. Die Positionierung wird dabei durch im Fahrzeug vorgesehene und an sich bekannte Sensorik überwacht. Die Steuerungseinrichtung verwertet die Überwachungsergebnisse zur Steuerung der Gaszufuhr.

In einer Ausgestaltung ist der Gasgenerator nacheinander in einer ersten und einer zweiten Zündstufe betreibbar, wobei die Steuerungseinrichtung die Gaszufuhr in den Airbag bei Zündung der zweiten Stufe in Abhängigkeit von der Positionierung eines Fahrzeuginsassen anpasst. In einem OOP-Fall beispielsweise wird bei Zündung der zweiten Stufe die Gaszufuhr in den Airbag begrenz oder sogar abgestellt, um ein vollständiges Aufblasen des Airbags zu verhindern. Dadurch wird beispielsweise die Beschleunigung des Kopfes eines Fahrzeuginsassen reduziert.

Die Airbaganordnung kann weiterhin ein Gehäuse zur Aufnahme eines Gasauslasses des Gasgenerators aufweisen, wobei das Gehäuse mindestens eine Abströmöffnung mit einstellbaren Querschnitt aufweist, und wobei durch Steuerung des Querschnitts die Gaszufuhr in den Airbag steuerbar ist. Die Abströmöffnung weist vorzugsweise in Richtung der Instrumententafel. Ausserdem kann das Gehäuse mindestens eine Öffnung zur Zufuhr für das durch den Gasgenerator erzeugte Gas in den Airbag aufweisen, deren Querschnitt ebenfalls einstellbar ist. In diesem Fall wird bei Zündung der zweiten Stufe in einem OOP-Fall die Gaszufuhröffnung zum Airbag geschlossen und gleichzeitig die Abströmöffnung in Richtung Instrumententafel geöffnet. Somit wird das Gas der zweiten Stufe fast vollständig vom Fahrzeuginsassen ferngehalten und unter die Instrumententafel geblasen.

Vorzugsweise wird die Steuerungseinrichtung durch einen Steuerschieber gebildet, der in der Airbaganordnung verschieblich angeordnet ist, und von dessen Verschiebung und/oder Positionierung innerhalb der Airbaganordnung die Gaszufuhr in den Airbag abhängt. Mittels Verschiebung des Steuerschiebers kann in dieser Ausgestaltung der Querschnitt der Abströmöffnung und/oder der Gaszufuhröffnung zum Airbag eingestellt werden.

Mit Vorteil ist der Steuerschieber durch von dem Gasgenerator erzeugtes Gas beaufschlagbar und dadurch verschiebbar. In dieser Ausgestaltung ist eine Steuerung der Gaszufuhr in den Airbag mit besonders einfachen mechanischen Mitteln möglich.

In einer weiteren Ausgestaltung schliesst an die Abströmöffnung ein Gaskanal an, der zur Leitung von durch die Abströmöffnung abströmendem Gas zu einem weiteren Airbag dient. Ein solcher weiterer Airbag kann beispielsweise ein Knieairbag sein. Somit wird der im Druckraum (d.h. der den Gasauslass enthaltenden Kammer) herrschende Überdruck genutzt, um den Knieairbag über den Gaskanal aufzublasen. Die Abströmöffnung oder Überstromöffnung wird nach Befüllen des weiteren Airbags durch die Steuereinrichtung wieder verschlossen.

In einer anderen Ausgestaltung wird die Steigerung der Entfaltbarkeit des Airbags durch ein Fangband erreicht, das ein vollständiges Entfalten des Airbags anfänglich begrenzt, und das lösbar in der Airbaganordnung untergebracht ist, so dass die räumliche Entfaltung des Airbags durch ein Lösen des Fangbandes realisierbar ist. Das Lösen des Fangbandes wird mittels einer geeigneten Sensorik gesteuert, die die Positionierung von Fahrzeuginsassen erfasst.

Die Erfindung soll in Ausführungsbeispielen anhand von Zeichnungen erläutert werden. Es zeigen:
- Figur 1: einen schematischen Querschnitt durch eine Airbaganordnung im Ruhezustand nach einem ersten Ausführungsbeispiel der Erfindung;
- Figur 2: einen schematischen Querschnitt durch die Airbaganordnung aus Figur 1 nach Aktivierung;
- Figur 3: einen schematischen Querschnitt durch eine Airbaganordnung im Ruhezustand nach einer Variante der ersten Ausführungsbeispieles;
- Figur 4: einen schematischen Querschnitt durch die Airbaganordnung aus Figur 3 nach Aktivierung;
- Figur 5: eine schematische Darstellung einer Ausgestaltung der Schliessvorrichtung;
- Figur 6: einen schematischen Querschnitt durch eine Airbaganordnung nach einer Variante des ersten Ausführungsbeispieles;
- Figur 7: einen schematischen Querschnitt durch eine Airbaganordnung im Ruhezustand nach einem zweiten Ausführungsbeispiel der Erfindung;
- Figur 8: eine schematische Darstellung einer Ausgestaltung des Diffusors;
- Figur 9: eine schematische Darstellung einer weiteren Ausgestaltung der Schliessvorrichtung;
- Figur 10: eine schematische Darstellung der Entfaltung des Airbags im "in-position"-Fall;
- Figur 11: eine schematische Darstellung der Entfaltung des Airbags im OOP-Fall;
- Figur 12: einen schematischen Querschnitt durch eine Airbaganordnung nach einem dritten Ausführungsbeispiel der Erfindung;
- Figur 13: einen schemtischen Querschnitt durch eine Ausgestaltungsvariante des ersten Ausführungsbeispieles der Erfindung; und
- Figur 14: einen schematischen Querschnitt durch eine Airbaganordnung nach einem vierten Ausführungsbeispiel der Erfindung;

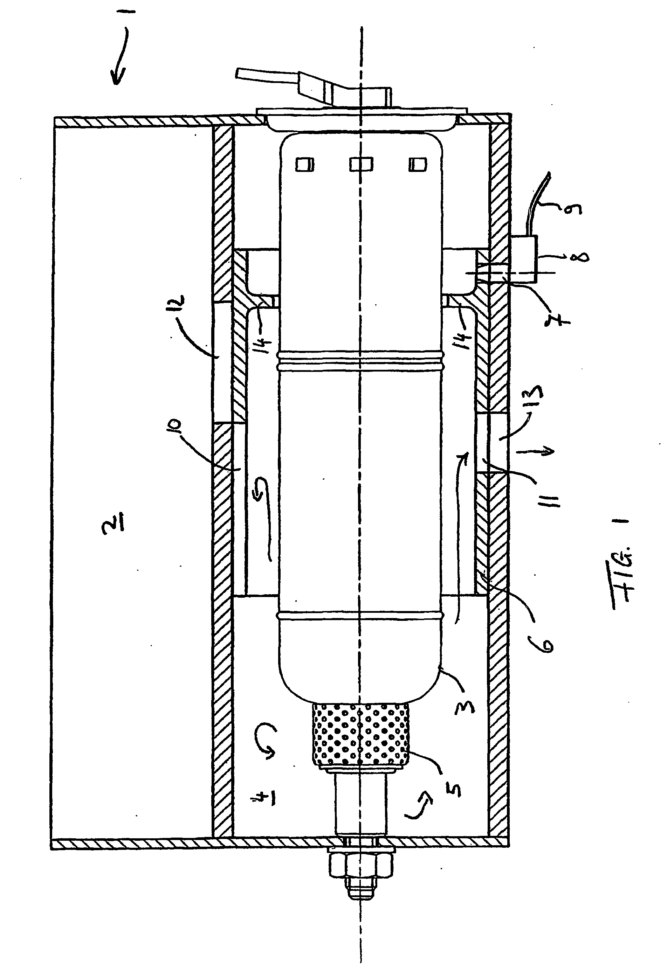

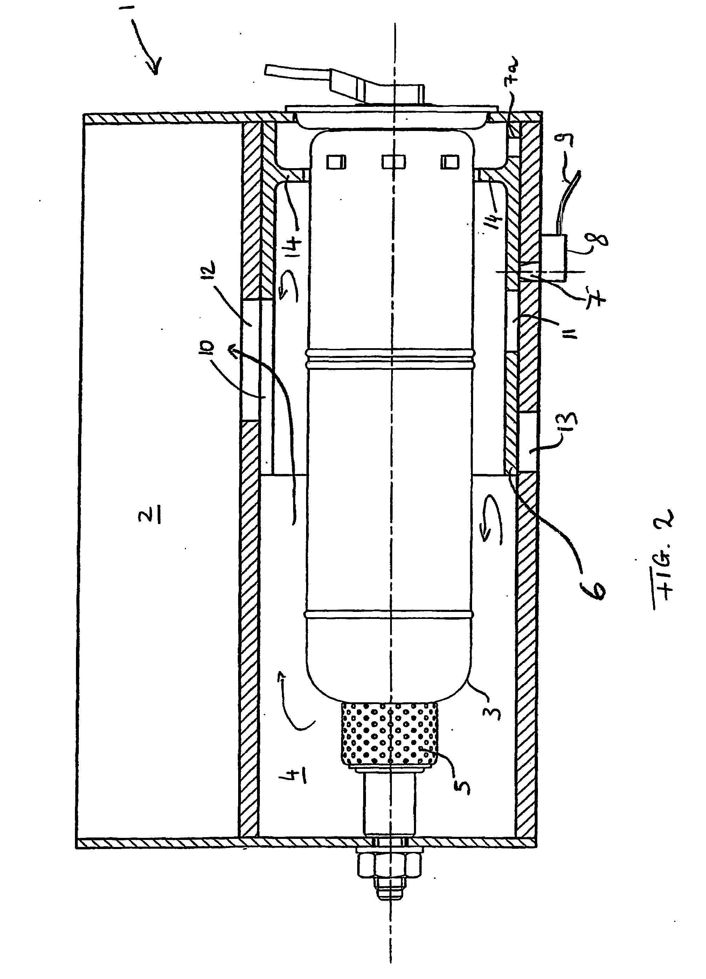

Figur 1 zeigt schematisch einen Querschnitt durch einen Teil einer Airbaganordnung 1. Die Airbaganordnung 1 umfasst eine Airbagkammer 2, in der ein nicht gezeigter Airbag im gefalteten Zustand untergebracht ist. Die Airbaganordnung 1 umfasst weiterhin einen Gasgenerator 3, welcher in einer von der Airbagkammer 2 abgetrennten zylindrischen Kammer 4 vorgesehen ist. Der Gasgenerator 3 weist an einem Ende Austrittsöffnungen 5 auf, durch welche das Gas aus dem Gasgenerator 3 in die zylindrische Kammer 4 ausströmt.

Die Airbaganordnung 1 umfasst weiterhin einen Steuerschieber 6, der zylindrischer Form ist und dessen Aussendurchmesser im wesentlichen dem Innendurchmesser der zylindrischen Kammer 4 entspricht, so dass der Steuerschieber 6 in der zylindrischen Kammer 4 gleitend geführt ist. Figur 1 zeigt den Steuerschieber 6 in seiner Ruheposition, in welcher er durch einen in Aussparungen 7a durch die Wandlungen der zylindrischen Kammer 4 und des Steuerschiebers 6 verlaufenden Stift 7 verriegelt ist. Diese Verriegelung ist einer Auslösereinrichtung 8 zugeordnet, die die Verriegelung bei Empfang eines Auslösesignals über eine Zuleitung 9 löst und den Steuerschieber 6 damit freigibt, so dass dieser innerhalb der zylindrischen Kammer 4 axial beweglich ist. Die Verriegelung kann beispielsweise durch ein Piezo-Auslöseelement realisiert sein.

Der Steuerschieber 6 weist senkrecht zu einer Längsachse gegenüberliegende erste und zweite Durchlassöffnungen 10 bzw. 11 auf. Die erste Durchlassöffnung 10 weist in Richtung zur Airbagkammer 2, während die zweite Durchlassöffnung 11 entgegengesetzt dem Fahrzeuginnenraum abgewandt ist. Die zylindrische Kammer 4 weist erste und zweite Abströmöffnungen 12 und 13 auf, die ebenfalls senkrecht zur Längsachse der zylindrischen Kammer 4 einander gegenüberliegen. Die erste Abströmöffnung 12 schafft eine Verbindung vom Innenraum der zylindrischen Kammer 4 zur Airbagkammer 2 zum Aufblasen des darin verstauten Airbags. Die zweite Abströmöffnung 13 ermöglicht ein Entweichen des Gases aus der Kammer 4 in einer OOP-Situation, wie nachfolgend detaillierter beschrieben wird.

Im in Figur 1 gezeigten Ruhezustand ist die zweite Durchlassöffnung 11 mit der zweiten Abströmöffnung 13 in Deckung. Das heisst, dass durch den Gasgenerator 3 in die Kammer 4 geblasenes Gas in diesem Zustand durch diese beiden Öffnungen entweichen kann. Gleichzeitig ist die erste Abströmöffnung 12 durch die Wandung des Steuerschiebers 6 verdeckt. Die erste Durchlassöffnung 10 ist in diesem Zustand nicht mit der ersten Abströmöffnung 12 in Deckung, sondern axial versetzt.

Bei einem Unfall erfolgt in bekannter Weise eine Aktivierung der Airbaganordnung 1, das heisst eine Auslösung des Airbags. Dabei erzeugt der Gasgenerator 3 Gas zum Aufblasen des Airbags. Das mit der Airbaganordnung 1 ausgestattete Fahrzeug weist nun Sensoren auf, die eine OOP-Situation erkennen. Solche Sensoren sind an sich bekannt und deshalb hier nicht weiter beschrieben. In Abhängigkeit von den Ausgangssignalen dieser Sensoren erzeugt eine im Fahrzeug vorgesehene Steuereinheit ein Auslösesignal, das über die Zuleitung 9 der Auslöseeinrichtung 8 zugeführt wird. Im Falle einer OOP-Situation erzeugt die Steuereinheit kein Auslösesignal, so dass die Auslöseeinrichtung 8 keine Entriegelung des Steuerschiebers 6 auslöst.

In diesem Fall verbleibt der Steuerschieber 6 also in der in Figur 1 gezeigten Ruhestellung. Der Gasgenerator 3 wird gleichzeitig durch ein (von dem von der Steuereinheit erzeugten Auslösesignal unabhängiges) Auslösesignal aktiviert, so dass Gas durch die Austrittsöffnungen 5 in den Innenraum der Kammer 4 strömt. Da die erste Abströmöffnung 12 jedoch verschlossen ist, strömt das gesamte Gas durch die geöffnete entgegengesetzte Abströmöffnung 13 ab. Der Airbag wird somit nicht aufgeblasen und der OOP-Fahrzeuginsasse vor möglichen Verletzungen bewahrt. Die Strömungsrichtung des Gases ist in Figur 1 durch Pfeile schematisch angedeutet.

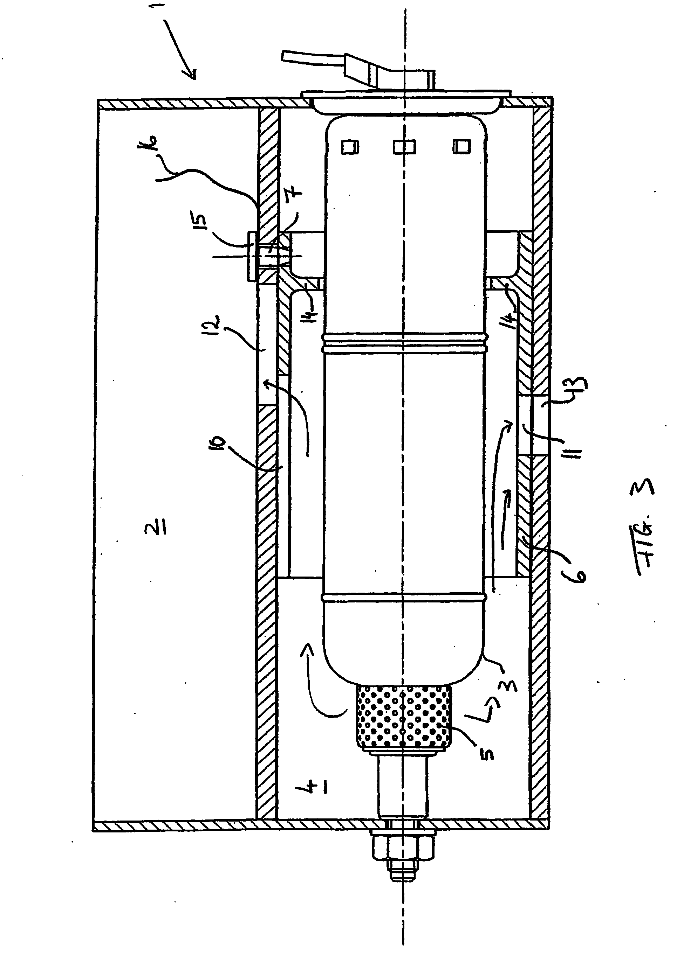

Figur 2 zeigt die Airbaganordnung 1 für den Fall, dass keine OOP-Situation ermittelt wurde und der Airbag folglich ordnungsgemäss ausgelöst werden kann. In diesem Fall wird von der oben erwähnten im Fahrzeug vorgesehenen Steuereinheit ein Auslösesignal erzeugt, das die Auslöseeinrichtung 8 zur Entriegelung des Steuerschiebers 6 veranlasst.

Nach Entriegelung wird der Steuerschieber 6 durch das durch den Gasgenerator 3 erzeugte in die Kammer 4 einströmende Gas von der in Figur 1 gezeigten Ruhelage axial in die in Figur 2 gezeigte Endlage bewegt. Die zur Bewegung des Steuerschiebers 6 notwendige Energie wird dabei durch das in die Kammer 4 einströmende Gas geliefert, welches auf eine durch einen in den zylindrischen Innenraum des Steuerschiebers 6 hineinragenden Vorsprung 14 gebildete Angriffsfläche angreift und den Steuerschieber 6 dadurch axial in Bewegung setzt. Die Strömungsrichtung des Gases ist in Figur 2 wiederum durch Pfeile schematisch angedeutet.

In der in Figur 2 gezeigten Endlage des Steuerschiebers 6 kommt die erste Durchlassöffnung 10 unter der ersten Abströmöffnung 12 zu liegen, so dass eine Verbindung zwischen dem Innenraum der zylindrischen Kammer 4 und der Airbagkammer 2 geschaffen wird, und das von dem Gasgenerator 3 erzeugte Gas ungehindert von der zylindrischen Kammer 4 in die Airbagkammer 2 strömen kann. Gleichzeitig ist die zweite Abströmöffnung 13 durch die Wandung des Steuerschiebers 6 geschlossen. Die in der Ruhelage noch über der zweiten Abströmöfnung 13 positionierte zweite Durchlassöfnung 11 ist nun axial zu dieser versetzt.

In der in Figur 2 gezeigten Endlage des Steuerschiebers 6 wird der Airbag folglich ungehindert entfaltet und aufgeblasen.

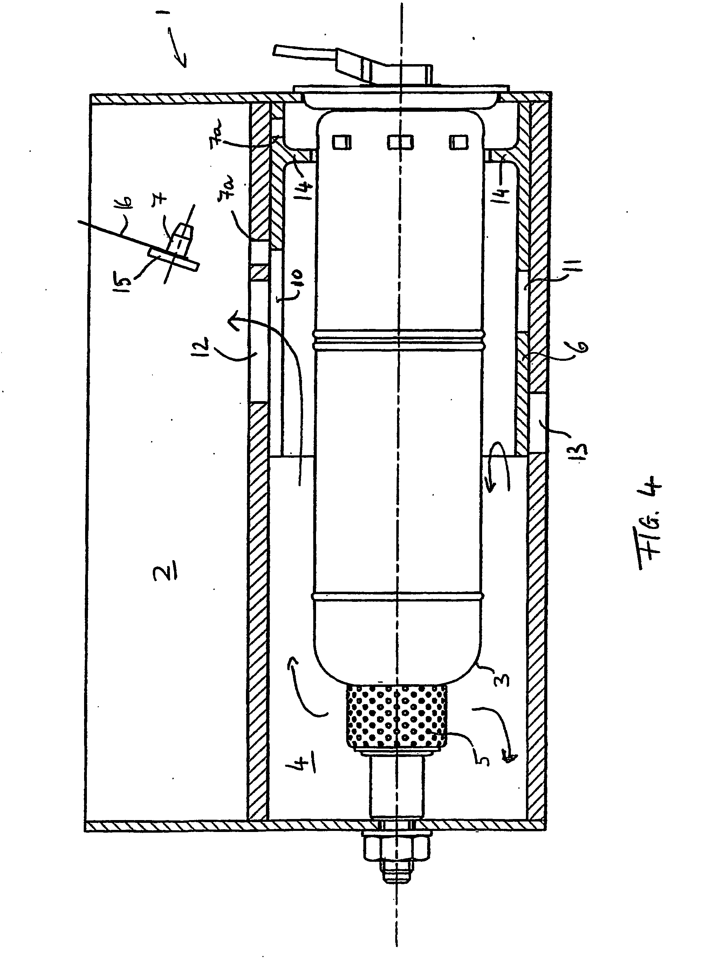

Figur 3 zeigt eine Airbaganordnung 1 nach einer Ausführungsvariante der Erfindung, mit dem Steuerschieber 6 in seiner Ruhelage. Im Unterschied zur Airbaganordnung 1 aus Figur 1 überlappen sich die erste Durchlassöffnung 10 und die erste Abströmöffnung 12 im Ruhezustand teilweise. Diese Überlappung wird durch eine Anpassung der axialen Erstreckung der ersten Durchlassöffnung 10 und/oder der ersten Abströmöffnung 12 erreicht. Dadurch ist auch in der Ruheposition des Steuerschiebers 6 eine Verbindung zwischen dem Innenraum der zylindrischen Kammer 4 und der Airbagkammer 2 vorhanden. Die Überlappung ist allerdings derart gering, dass bei Auslösung des Gasgenerators 3 nur ein begrenzter Gasstrom von der zylindrischen Kammer 4 in die Airbagkammer 2 stattfinden kann, verglichen mit einer vollständigen Öffnung der zweiten Abströmöffnung 12.

Ein weiterer Unterschied zu der Airbaganordnung 1 aus Figur 1 ist die Verriegelung des Steuerschiebers 6 in seiner Ruhelage. Die Verriegelung ist wie im ersten Ausführungsbeispiel durch einen Stift 7 verwirklicht; im Vergleich dazu ist der Stift 7 allerdings an einer senkrecht zur Achse der zylindrischen Kammer 4 gegenüberliegenden Seite in einer Aussparung 7a in den Wandlungen des Steuerschiebers 6 und der Kammer 4 vorgesehen. Der Stift 7 ragt mittels eines Kopfes 15 in die Airbagkammer 2 hinein. Mit dem Kopf 15 verbunden ist ein Ende eines Fangbandes 16, das mit seinem anderen Ende an der Oberplatte des nicht gezeigten Airbags befestigt ist. Die Länge des Fangbandes 16 ist dabei kürzer als der Abstand der Oberplatte des Airbags in dessen voll aufgeblasenem Zustand von der Wandung der Kammer 4.

In der in Figur 3 gezeigten Ruhelage des Steuerschiebers 6 liegen die zweite Durchlassöffnung 11 und die zweite Abströmöffnung 13 ebenso wie in der in Figur 1 gezeigten Airbaganordnung übereinander, so dass ein Abströmen vom Gasgenerator 3 erzeugten Gas vom Fahrzeuginnenraum weg ermöglicht ist.

Für die Entfaltung des Airbags gibt es nun zwei Szenarien. In dem ersten Szenario ist die Sitzposition des Fahrzeuginsassen gegenüber dem aufzublasenden Airbag ordnungsgemäss ("in position" im Gegensatz zu OOP), so dass sich der Airbag nach Auslösen ungehindert entfalten und aufblasen kann. Über einen ersten Zeitraum hinweg bläst sich der Airbag relativ langsam auf, da der durch die Überlappung der Öffnungen 10 und 12 ermöglichte Gasstrom in die Airbagkammer 2 begrenzt ist und ein Abströmen des Gases durch die übereinander liegenden Öffnungen 11 und 13 stattfindet.

Sobald der Airbag soweit aufgeblasen ist, dass das Fangband 16 zwischen der Oberplatte des Airbags und dem Stiftkopf 15 gespannt wird und der Aufblasevorgang weiterhin nicht durch einen OOP-Fahrzeuginsassen behindert wird, so ist die durch das Fangband 16 auf den Stift 7 ausgeübte Zugkraft grösser als die Kraft, mit der der Stift 7 in der Aussparung gehalten wird. Somit bewirkt ein weiters Aufblasen des Airbags eine Entriegelung des Steuerschiebers 6 durch Herausziehen des Stiftes 7 mittels des Fangbandes 16.

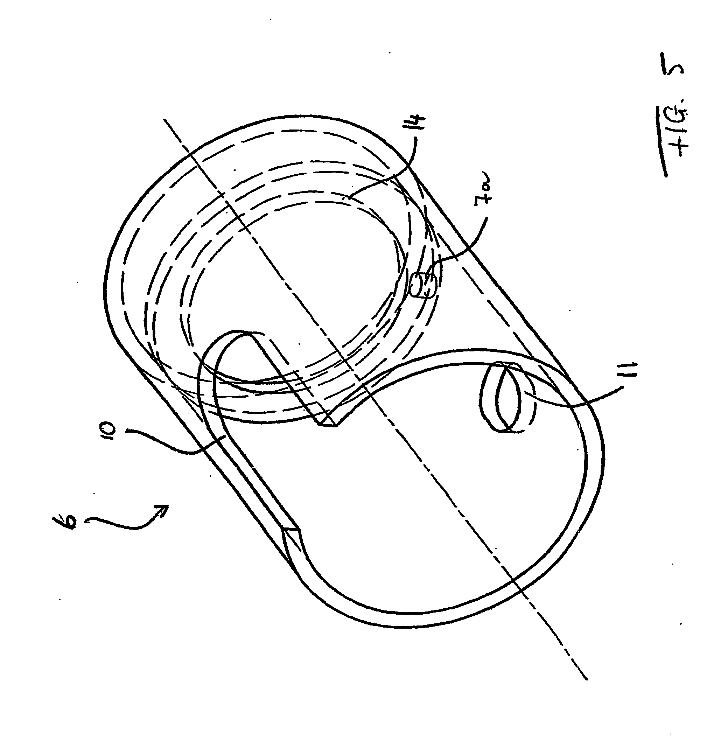

Dies ist in Figur 4 schematisch illustriert. Das Fangband 16 ist gestrafft und der Abstand der Oberplatte der Airbags von der Wandung der Kammer 4 bereits grösser als die Länge des Fangbandes 16, so dass der Stift 7 aus den Aussparungen 7a in den Wandungen der Kammer 4 und des Steuerschiebers 6 herausgerissen ist. Nach Wegfall der axialen Fixierung des Steuerschiebers 6 wird dieser durch das von dem Gasgenerator 3 erzeugte Gas axial verschoben, wie bereits in Bezug auf Figur 2 erläutert. Der Gasstrom ist in den Figuren 3 und 4 wiederum durch Pfeile schematisch angedeutet.

Durch die axiale Verschiebung des Steuerschiebers 6 wird die erste Abströmöffnung 12 vollends geöffnet, während die zweite Abströmöffnung 13 geschlossen wird. Dies entspricht dem in Bezug auf die Figuren 1 und 2 beschriebenen Vorgang. Das vom Gasgenerator 3 erzeugte Gas strömt nun vollständig durch die Öffnungen 10 und 12 in den Airbag, der sich dadurch komplett entfaltet und aufbläst. In diesem zweiten Zeitraum nach Entriegelung des Steuerschiebers 6 ist der Aufblasevorgang deshalb gegenüber dem ersten Zeitraum vor dessen Entriegelung stark beschleunigt. Der Airbag entfaltet sich trotz der beabsichtigten anfänglichen Verzögerungen schnell genug, um dem Fahrzeuginsassen den bestmöglichen Schutz zu gewähren.

In einem zweiten Szenario befindet sich der Fahrzeuginsasse "out of position" (OOP-Situation). Der Fahrzeuginsasse blockiert dabei den Airbag bei seiner Entfaltung. Dadurch, dass das Aufblasen des Airbags während des oben erwähnten ersten Zeitraumes und der damit verbundene Druckaufbau im Airbag vermindert ist, ist die auf den Airbag wirkende Kraft durch den OOP-Fahrzeuginsassen grösser, als die in umgekehrte Richtung wirkende Ausdehnkraft des Airbags" so dass ab dem Moment, in dem ein Gleichgewicht dieser gegensätzlichen Kräfte eintritt, das gesamte durch den Gasgenerator 3 hinzu erzeugte Gas durch die zweite Abströmöffnung 13 abströmt. Ein weiteres Aufblasen des Airbags, wird damit verhindert, wodurch auch ein Straffen des Fangbandes 16 und das damit verbundene Entriegeln des Steuerschiebers 6 ausbleibt.

Der in Figur 4 illustrierte Zustand tritt somit im zweiten Szenario gar nicht ein. Der Fahrzeuginsasse wird dadurch vor den Folgen eines vollen Aufblasen des Airbags im OOP-Fall bewahrt.

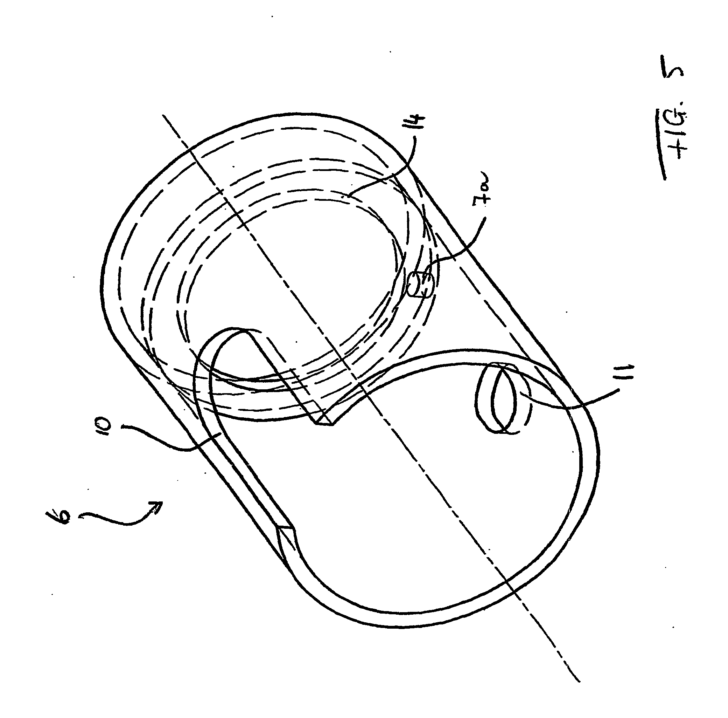

Figur 5 illustriert schematisch den Steuerschieber 6 des ersten Ausführungsbeispieles. Wie bereits erwähnt ist der Steuerschieber 6 zylindrisch und nach beiden Enden offen. Der Steuerschieber 6 verfügt wie oben erläutert über erste und zweite Durchlassöffnungen 10 und 11 in dessen Wandung. Die erste Durchlassöffnung 10 ist dabei durch einen U-förmigen Freischnitt verwirklicht, während die zweite Durchlassöffnung 11 durch ein Loch in einem senkrecht zur Zylinderachse gegenüberliegenden Bereich der Wandung gebildet ist. Die zweite Durchlassöffnung 11 ist flächenmässig kleiner als die erste Durchlassöffnung 10. Die Dimensionen der Öffnungen 10 und 11 können je nach erforderlichem Aufblasverhalten des Airbags bzw. Abströmverhalten vom Fahrzeuginnenraum weg festgelegt werden.

Weiterhin weist der Steuerschieber 6 wie ebenfalls bereits erwähnt eine Aussparung 7a zur Aufnahme des zur Verriegelung des Steuerschiebers 6 in der Kammer 4 dienenden Stiftes 7, sowie einen konzentrisch in den Innenraum des Steuerschiebers 6 ragenden ringförmigen Vorsprung 14, zur Schaffung einer Angriffsfläche für von dem Gasgenerator 3 erzeugten Gas, wie anhand der Figuren 1 bis 4 erläutert.

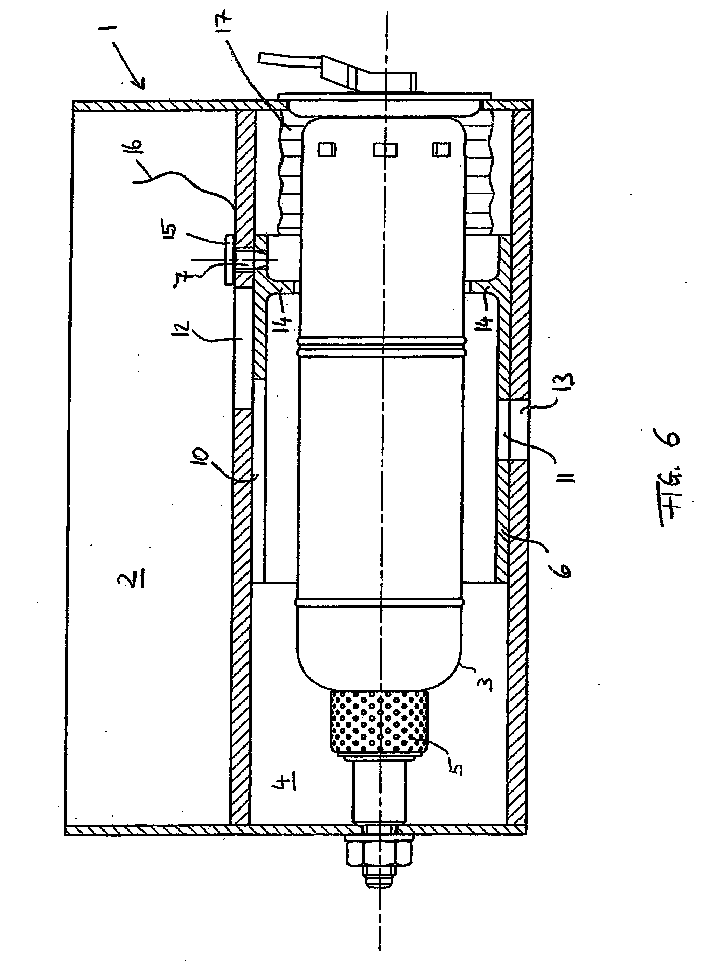

Figur 6 zeigt eine Ausführungsvariante der Airbaganordnung 1 aus Figur 3. In dieser Ausführungsvariante ist zwischen dem Steuerschieber 6 und einer Innenwand des Gehäuses der Airbaganordnung 1 ein Deformationselement 17 so angebracht, dass dieses sich bei Entriegelung des Steuerschiebers 6 verformt und dessen Axialbewegung zur Öffnung der Abströmöffnung 12 abbremst. Die Abbremswirkung ist dabei durch geeignete Wahl der Beschaffenheit des Deformationselementes 17 beliebig festlegbar, so dass der Bewegungsvorgang sowie dessen Verlauf besser steuerbar sind. Das Deformationselement 17 kann beispielsweise durch ein Biegeblech verwirklicht sein. Alternativ kann das Verformungselement 17 so beschaffen sein, dass dessen Verformungscharakteristik durch ein elektrisches Signal steuerbar ist, beispielsweise in Abhängigkeit von der Verzögerung des Fahrzeugs bei einem Unfall, oder der Sitzposition des Fahrzeuginsassen. In jedem Fall kann durch die Vorsehung eines Deformationselementes der sogenannte "on set" des Gasmassenstromes in den Airbag besser eingestellt werden.

Das Deformationselement kann ausserdem so ausgebildet sein, dass es den Steuerschieber 6 nach vollständiger Zündung des Gasgenerators 3 wieder von der Endlage in die Ausgangslage zurückschiebt, und somit die Wirkung einer Feder aufweist. Dies ist beispielsweise mittels einer elektrischen Steuerung realisierbar (Piezo-Element).

In einer nicht gezeigten Ausführungsvariante übernimmt das Deformationselement 17 auch die Funktion der Verriegelung des Steuerschiebers 6. In dieser Ausführungsvariante ist das Deformationsverhalten elektrisch steuerbar, so dass der Steuerschieber im Ruhezustand verriegelt wird, während bei Aktivierung der Airbaganordnung 1 eine Deformation ausgelöst wird, so dass der Steuerschieber 6 axial beweglich ist. Beispielsweise kann in dieser Ausführungsvariante das Deformationselement 17 durch ein Piezo-Element realisiert sein.

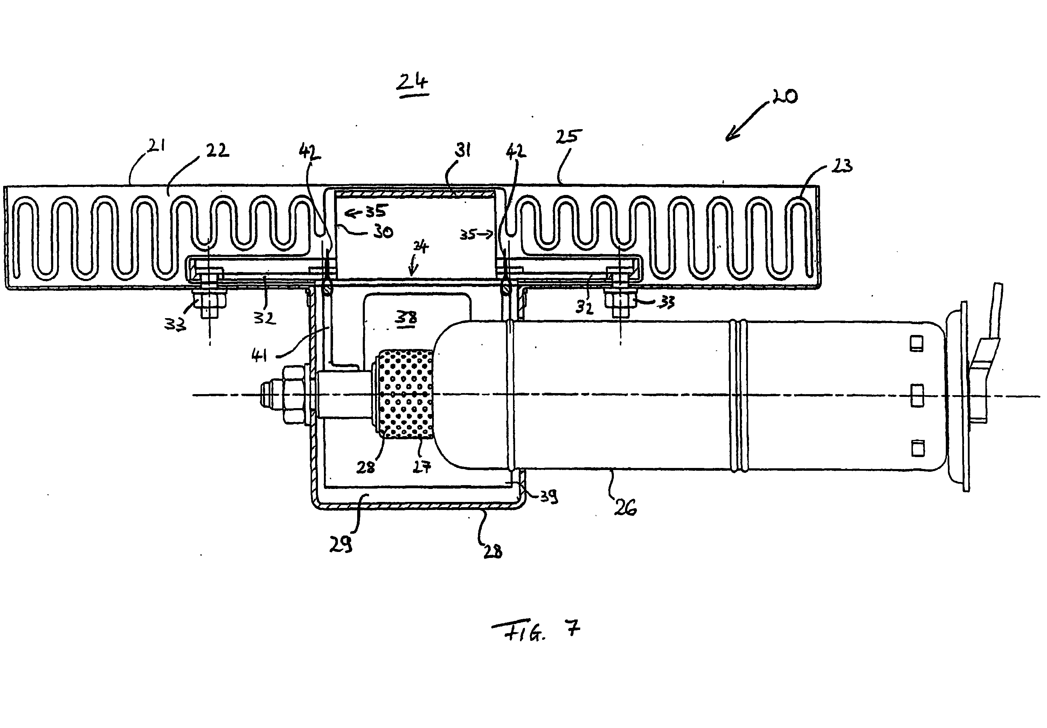

Figur 7 zeigt eine Airbaganordnung 20 nach einem zweiten Ausführungsbeispiel der Erfindung. Die Airbaganordnung 20 umfasst eine durch ein erstes Gehäuseteil 21 gebildete Airbagkammer 22, in welcher ein Airbag 23 in gefalteter Form untergebracht ist, und dessen in Richtung Fahrzeuginnenraum 24 weisende Endfläche 25 eine nicht gezeigte Reissnaht aufweist, die bei einem Aufblasen des Airbags 23 aufgerissen wird, so dass der Airbag 23 sich in den Fahrzeuginnenraum 24 hinein entfalten kann.

Die Airbageinheit 20 umfasst weiterhin einen Gasgenerator 26, welcher an einem Ende ein Luftaustrittselement 27 mit Luftaustrittsöffnungen 28 aufweist. Das Luftaustrittselement 27 ist in einer durch ein zweites Gehäuseteil 28 gebildeten Kammer 29 angeordnet, die zur Airbagkammer 22 hin offen und relativ zur Airbagkammer 22 mittig angeordnet ist.

Weiterhin ist in der Airbagkammer 22 ein Halteelement 30 bestehend aus einem Halteblech 31 und einem Diffusor 32 vorgesehen. Das Halteblech 31 ist mittels Schrauben 33 an der der Endfläche 25 gegenüberliegenden Wandung 34 des ersten Gehäuseteiles 21 befestigt. Das Halteelement 30 ist darüber hinaus innerhalb des gefalteten Airbags 23 so angeordnet, dass freie Enden 35 des Airbags 23 zwischen dem Halteblech 31 und der Wandung 34 verlaufen und ebenfalls mittels der Schrauben 33 an dem ersten Gehäuseteil 21 befestigt sind.

Der Diffusor 31 ist oberhalb eines Luftdurchlasses 34 angeordnet, durch welchen die Airbagkammer 22 mit der Kammer 29 so verbunden ist, dass durch den Gasgenerator 26 erzeugtes und aus dem Luftaustrittselement 27 austretendes Gas in die Airbagkammer 22 strömt und den Airbag 23 aufbläst. Durch den Diffusor 31 wird in die Airbagkammer 22 strömendes Gas seitlich abgeleitet; d. h., dass das Gas durch den Luftdurchlass 34 auf die zu diesem weisende Innenfläche des Diffusors 31 auftrifft und durch seitliche zwischen dem Diffusor 31 und dem Unterteil 32 gebildete Öffnungen 35 in den Airbag 23 hineinströmt und diesen aufbläst Mittels des Diffusors 31 wird folglich ein gleichmässigeres und weniger auf die Mitte des Airbags 32 konzentriertes Aufblasen desselben erreicht.

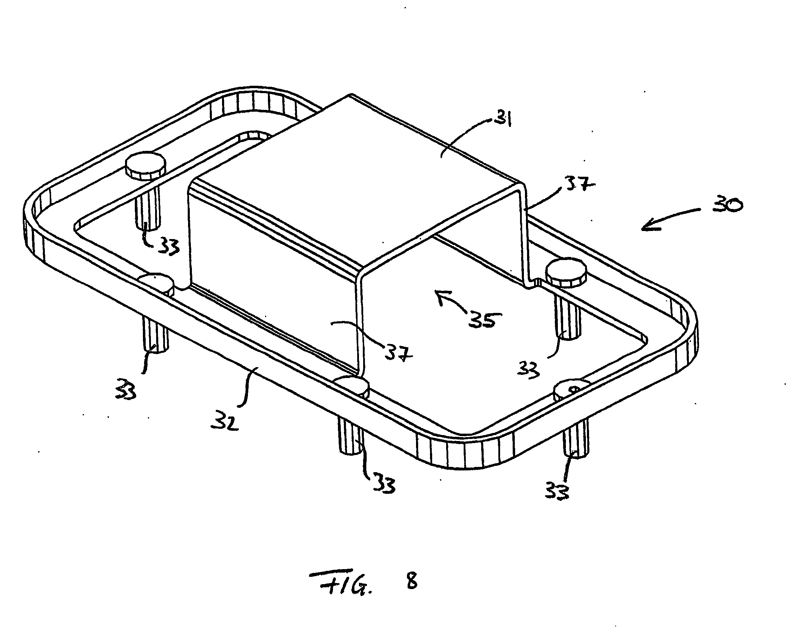

Figur 8 zeigt eine detaillierte Ansicht des Halteelementes 30. Die Bezugszeichen von Figur 8 entsprechen denen aus Figur 7. Wie in Figur 8 zu sehen ist, ist der Diffusor 31 durch zwei sich gegenüberliegende Seitenteile 37 mit dem Halteblech 32 verbunden. Zwischen den Seitenteilen senkrecht zum Diffusor sind die Öffnungen 35 gebildet.

Wie in Figur 7 weiterhin schematisch dargestellt, weist das zweite Gehäuseteil 28 senkrecht zur Bildebene zwei Luftabströmöffnungen 38 auf. Darüber hinaus ist innerhalb der Kammer 29 ein Schieber 39 angeordnet, der senkrecht zum Diffusor 31 entlang den Luftabströmöffnungen 38 verschiebbar ist.

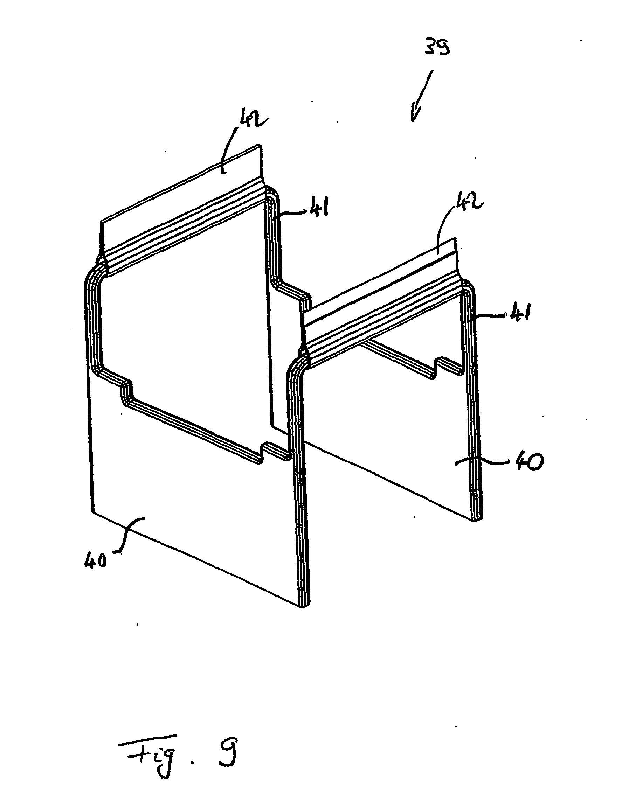

Figur 9 zeigt eine detailliertere Anschicht des Schiebers 39. Dieser weist zwei zueinander parallel verlaufende Seitenwände 40 auf, die über zwei Bügel 41 miteinander verbunden sind. Mit diesen Bügeln 41 verbunden sind die Enden eines Fangbandes 42. Der Mittelteil des Fangbandes 42 ist mit der Innenseite des Airbags 23 verbunden.

In Figur 7 ist der Schieber 39 in seiner Ruheposition gezeigt. In der Ruheposition liegen die Seitenwände 40 unterhalb der Abströmöffnungen 38. Bei einem Aufblasen des Airbags sind die Abströmöffnungen deshalb offen, so dass die aus den Luftaustrittsöffnungen 28 strömende Luft nicht nur durch den Luftdurchlass 34 in die Airbagkammer 22 strömt, sondern zumindest anfänglich auch durch die Abströmöffnungen 38 nach aussen entweicht.

Im Verlaufe einer ordnungsgemässen Entfaltung des Airbags 23 (d. h. im "in positon" Fall) werden die Fangbänder 42 gestrafft und der Schieber 39 durch die Fangbänder 42 nach oben gezogen, so dass dabei die Seitenwände 40 des Schiebers 39 über den Luftabströmöffnungen 38 zu liegen kommen und diese dadurch verschliessen. Ein weiteres Entweichen des durch den Gasgenerator 26 erzeugten Gases wird somit verhindert, so dass der Airbag 23 sich auf seine maximale Grösse entfalten kann.

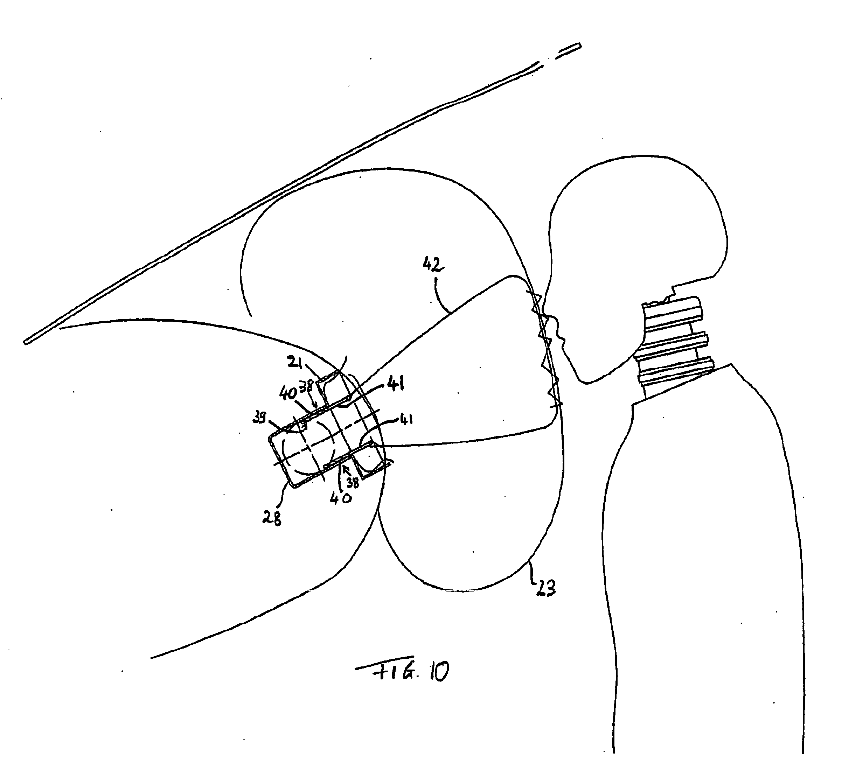

Dieser Fall ist schematisch in Figur 10 illustriert. Die Fangbänder 42 sind durch den vollständigen aufgeblasenen Airbag gespannt und haben ein Verschieben des Schiebers 39 nach oben (d. h. in Richtung zum Airbag 23) und damit ein Verschliessen der Abströmöffnungen 38 bewirkt. Durch das freie Entfalten des Airbags tritt zusätzlich ein Aspirationseffekt ein, d. h. dass durch die anfänglich noch geöffneten Abströmöffnungen 38 Luft von aussen eingesaugt wird. Der illustrierte Zustand tritt etwa 10 bis 15 Millisekunden nach Zündung des Airbags 23 ein.

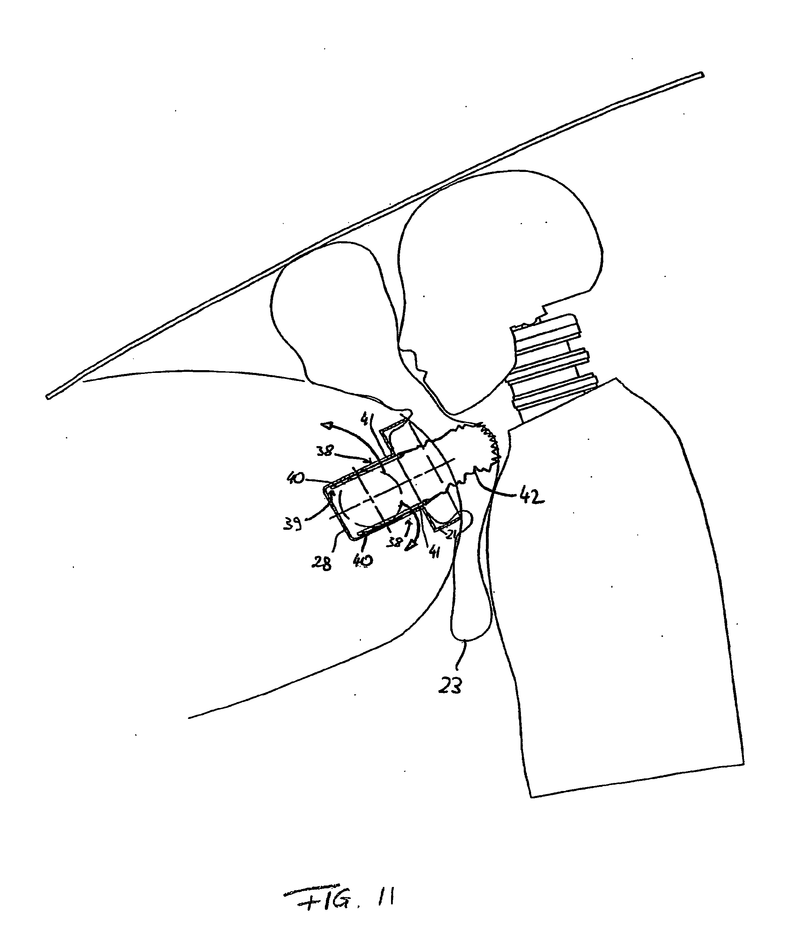

Der gegenteilige Fall ist in Figur 11 illustriert. Hier befindet sich ein Fahrzeuginsasse "out of position" und blockiert dadurch ein ordnungsgemässes Aufblasen des Airbags 23. Dadurch wird gleichzeitig ein Sich-Spannen der Fangbänder 42 verhindert bzw. verzögert, was wiederum zur Folge hat, dass der Schieber 39 ganz bzw. länger in seiner Ruheposition verbleibt. Damit bleiben die Abströmöffnungen 38 ganz bzw. länger geöffnet, so dass die vom Gasgenerator 26 erzeugte Luft durch diese entweichen kann (schematisch durch Pfeile angedeutet). Ein explosionsartiges Aufblasen des Airbags 23 wird somit verhindert und der Fahrzeuginsasse entsprechend geschützt.

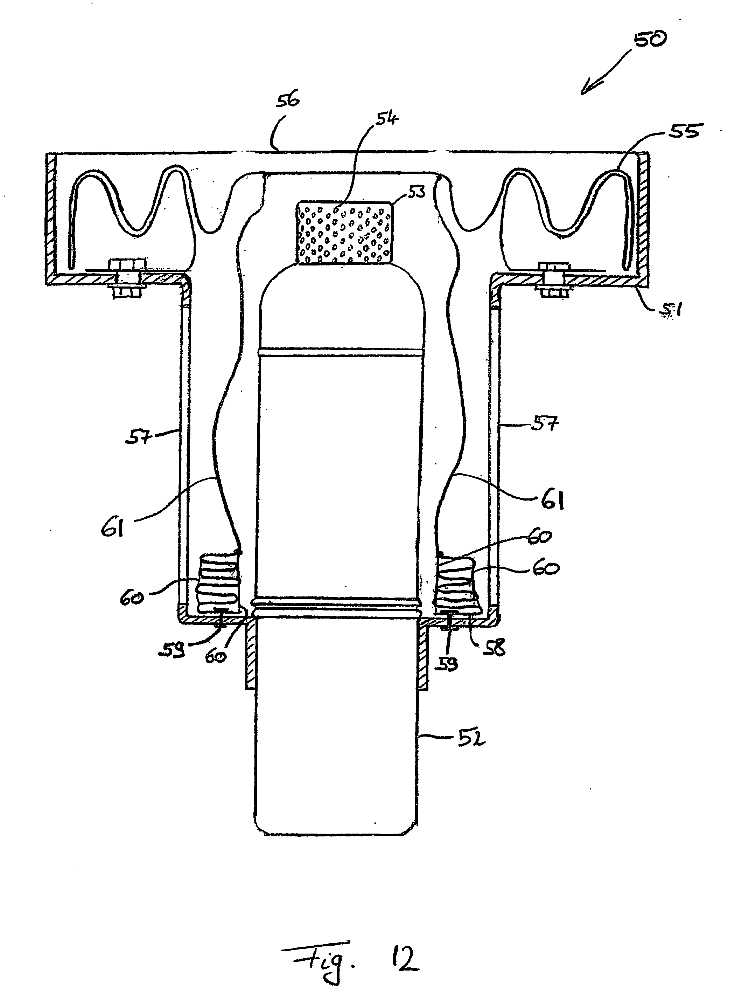

Figur 12 zeigt schematisch eine Airbaganordnung 50 nach einem dritten Ausführungsbeispiel der Erfindung. Die Airbaganordnung 50 umfasst ein Gehäuse 51, in welches ein Gasgenerator 52 teilweise aufgenommen ist. Wie in den anderen Ausführungsbeispielen weist der Gasgenerator 52 ein Luftaustrittselement 53 mit Luftaustrittsöffnungen 54 auf. Im oberen breiteren Teil des Gehäuses 51 ist ein Airbag 55 im gefalteten Zustand untergebracht, der sich durch eine nicht gezeigte Reissnaht in einer Stirnfläche 56 des Gehäuses 51 in den Fahrzeuginnenraum entfalten kann.

Das Gehäuse 51 weist seitliche Luftabströmöffnungen 57 auf. Am der Stirnfläche 56 entgegengesetzten Ende des Gehäuses 51 ist darin ein gefalteter zylinderförmiger Gewebeschlauch 58 angeordnet, dessen unteres Ende über eine Befestigung 59 an dem Gehäuse 51 angebracht ist. Die Falten des Gewebeschlauches 58 sind über Reissleinen 60 miteinander verbunden, so dass der Gewebeschlauch 58 im Ruhezustand von Figur 12 gefaltet bleibt. Das obere Ende des Gewebeschlauches 58 ist über Fangbänder 61 mit der Innenseite des Airbags 55 verbunden.

Beim Aufblasen des Airbags 55 im "in position" -Fall wird dessen Entfaltung nicht durch einen falsch plazierten Fahrzeuginsassen gebremst, so dass die Ausdehnung des Airbags 55 ein Straffen der Fangbänder 62, ein Reissen der Reissleinen 60, sowie ein Entfalten des Gewebeschlauches 58 bewirkt. Der entfaltete Gewebeschlauch 58 verläuft seiner Länge nach entlang den Abströmöffnungen 57 und deckt diese dadurch ab. Das von dem Gasgenerator 52 erzeugte Gas kann somit nicht durch die Abströmöffnungen 57 entweichen, sondern strömt nach Entfalten des Gewebeschlauches 58 vollständig in den Airbag 55. Dieser wird deshalb voll entfaltet, wie in Figur 10 gezeigt.

Im OOP-Fall wird die Entfaltung des Airbags 55 durch den Fahrzeuginsassen behindert, wie in Figur 11 gezeigt. In diesem Fall werden die Fangbänder 61 nicht gestrafft und der Gewebeschlauch 58 nicht entfaltet. Während der Gaserzeugung durch den Gasgenerator 52 entweicht ein Grossteil des erzeugten Gases durch die Abströmöffnungen 57, wodurch ein vollständiges Aufblasen des Airbags 55 zum Schutze des Fahrzeuginsassen verhindert wird.

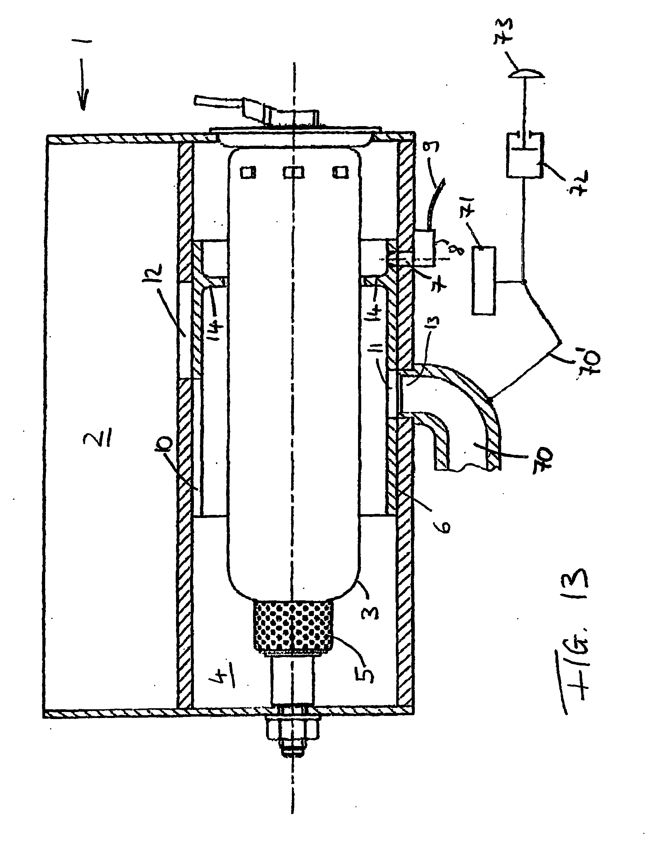

Figur 13 illustriert eine Ausgestaltungsvariante des ersten Ausführungsbeispieles der Erfindung. Dementsprechend sind die Bezugszeichen aus Figur 1 in Figur 13 übernommen. Im Unterschied zu der Ausgestaltungsvariante aus Figur 1 ist an die zweite Abströmöffnung 13 ein Gaskanal 70 angeschlossen, über welchen das aus der Kammer 4 abströmende Gas dazu zu verwenden, beispielsweise einen weiteren Airbag (z.B. einen Knieairbag) aufzublasen, ein Kniepolster auszufahren, einen Kappenöffnungsmechanismus zu betätigen, etc. Dies ist in Figur 13 schematisch durch die Symbole 70' bis 73 dargestellt, welche ein an die Gasleitung 70' angeschlossenes (Knie-)Airbagmodul 71 , einen Kolben 72, sowie einen durch den Kolben 72 betätigbares Kniepolster 73 darstellen. In dieser Ausgestaltungsvariante wird also der in der Kammer 4 herrschende Gasüberdruck zur Betätigung anderer Elemente verwendet. Anschliessend wird die zweite Abströmöffnung 13 wieder verschlossen.

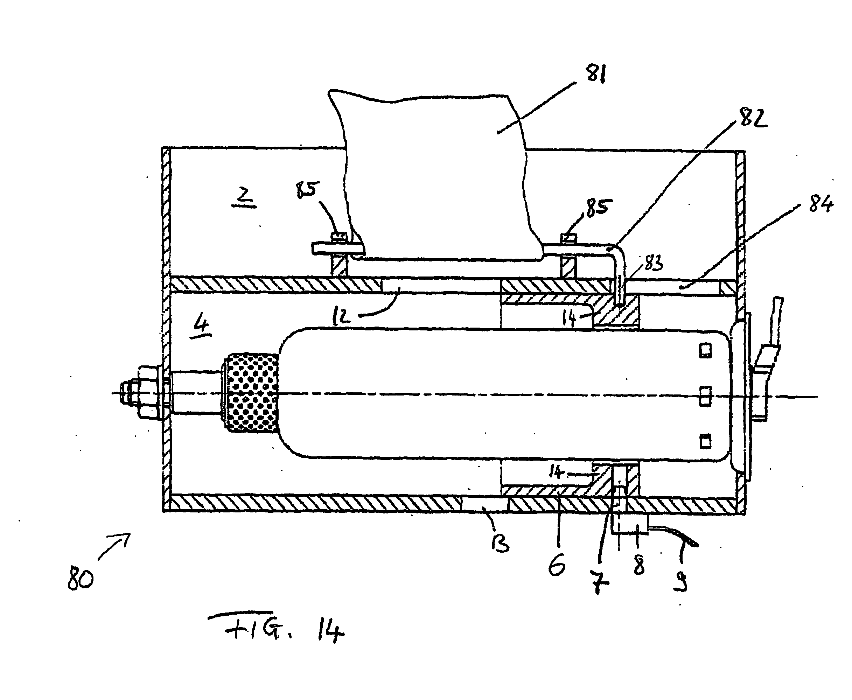

Figur 14 zeigt schematisch eine Airbaganordnung 80 nach einem vierten Ausführungsbeispiel der Erfindung. In diesem Ausführungsbeispiel ist in der Airbagkammer 2 oberhalb der ersten Abströmöffnung 12 ein Fangband 81 auf einen Haltestift 82 aufgezogen. Der Haltestift 82 weist ein rechtwinklig abgebogenes Ende 83 auf, welches in dem Steuerschieber 6 verankert ist. Weiterhin ist in der Trennwand zwischen Airbagkammer 2 und der zylindrischen Kammer 4 ein Führungsschlitz 84 vorgesehen, der eine Verschiebung des Haltestiftes 82 parallel zur Zylinderachse der Kammer 4 erlaubt. Zu beiden Seiten der zweiten Abströmöffnung 12 ist der Haltestift 82 in Halterungen 85 ebenso parallel zur Zylinderachse der Kammer 4 verschieblich gelagert. Zwischen den Halterungen 85 ist das Fangband 81 auf den Haltestift 82 aufgezogen.

Das Fangband 81 begrenzt anfänglich die Ausdehnung des Airbags bei dessen Aktivierung. Stellen die im Fahrzeug vorgesehenen Sensoren eine OOP-Situation fest, so verbleibt der Steuerschieber 6 in seiner in Figur 14 gezeigten Ruhestellung, und die Ausdehnung des Airbags bleibt begrenzt. Der in der Kammer 4 entstehende Überdruck kann sich über die optionale zweite Abströmöffnung 13 abbauen.

Wird keine OOP-Situation festgestellt, so bewirkt die Auslöseeinrichtung 8 eine Freigabe des Steuerschiebers 6 in der bereits oben beschriebenen Weise, so dass dessen Vorsprung 14 von dem vom Gasgenerator 3 erzeugten Gas beaufschlagt wird und sich in der Bildorientierung von Figur 14 nach rechts bewegt. Dadurch wird auch der Haltestift 82 mitbewegt. Je nach Dimensionierung des Verschiebeweges des Haltestiftes 82, dessen Länge, und der Abstände zwischen den Halterungen 85 wird zumindest das dem abgewinkelten Ende 83 des Haltestiftes 82 entgegengesetzte Ende aus der Halterung 85 gelöst. Dadurch kann des Halteband 81 von der Haltestange 82 abrutschen, wodurch die Begrenzung der Airbagausdehnung aufgehoben ist. Der Aibag kann sich nun also vollständig entfalten, z.B. für eine grossflächige Abstützung des Kopfes eines "in position" Fahtzeuginsassen.

Damit lässt sich eine optimierte Insassenkinematik verwirklichen. Das heisst, dass die Airbagentfaltung in Abhängigkeit von der Fahrzeuginsassenpositionierung steigerbar ist, und dadurch die Beschleunigung der durch den sich entfaltenden Airbag beaufschlagten Körperteile des Fahrzeuginsassen (insbesondere Kopf eines Erwachsenen, oder der gesamte Körper eines Kleinkindes) begrenzbar ist, um Verletzungen (z.B. als Folge ausschliesslicher Beschleunigung des Erwachsenenkopfes, oder durch Airbagentfaltung verursachter Rückwärtsrolle eines Kleinkindes) zu verhindern.

Anzumerken ist, dass die Erfindung nicht auf die beschriebenen Ausführungsbeispiele beschränkt ist, sondern Modifikationen im Rahmen des durch die Ansprüche festgelegten Schutzbereiches umfasst. Insbesondere ist es möglich, die verschiedenen Arten der beispielhaften Schliessvorrichtungen und Auslösemechanismen miteinander beliebig zu kombinieren.

### Bezugszeichenliste

- 1: Airbaganordnung
- 2: Airbagkammer
- 3: Gasgenerator
- 4: Zylindrische Kammer
- 5: Austrittsöffnungen
- 6: Steuerschieber
- 7: Stift
- 7a: Aussparungen
- 8: Auslöseeinrichtung
- 9: Elektrische Zuleitung
- 10: Erste Durchlassöffnung
- 11: Zweite Durchlassöffnung
- 12: Erste Abströmöffnung
- 13: Zweite Abströmöffnung
- 14: Vorsprung
- 15: Kopf
- 16: Fangband
- 17: Deformationselement
- 20: Airbaganordnung
- 21: erstes Gehäuseteil
- 22: Airbagkammer
- 23: Airbag
- 24: Fahrzeuginnenraum
- 25: Endfläche
- 26: Gasgenerator
- 27: Luftaustrittselement
- 28: Luftaustrittsöffnungen
- 29: Kammer
- 30: Halteelement
- 31: Diffusor
- 32: Halteblech
- 33: Schrauben
- 34: Wandung des ersten Gehäuseteiles
- 35: Freie Enden des Airbags
- 37: Seitenteile
- 38: Luftabströmöffnungen
- 39: Schieber
- 40: Seitenwände
- 41: Bügel
- 42: Fangbänder
- 50: Airbaganordnung
- 51: Gehäuse
- 52: Gasgenerator
- 53: Luftaustrittselement
- 54: Luftaustrittsöffnungen
- 55: Airbag
- 56: Stirnfläche
- 57: Seitliche Luftabströmöffnungen
- 58: Gewebeschlauch
- 59: Befestigung
- 60: Reissleinen
- 61: Fangbänder
- 70: Gasleitung
- 70': Symbol Gasleitung
- 71: Symbol
- 72: Airbagmodul
- 73: Kniepolster
- 80: Airbaganordnung
- 81: Fangband
- 82: Haltestift
- 83: abgewinkeltes Ende des Haltestiftes
- 84: Führungsschlitz
- 85: Halterungen

## Patentansprüche

1. Airbaganordnung (1, 20, 80), mit
einem Airbag (23);
einem Gasgenerator (3, 26) zum Erzeugen von Gas zum Aufblasen des Airbags (23);
einem Gehäuse zur Aufnahme des Airbags (23) und/oder zumindest eines Teiles des Gasgenerators (3, 26);
mindestens einer Abströmöffnung (13, 38) in dem Gehäuse zum Ableiten von Gas aus der Airbaganordnung (1,20, 80);
mindestens einer Durchtrittsöffnung in dem Gehäuse, durch welche durch den Gasgenerator (3, 26) erzeugtes Gas in den Airbag (23) gelangen kann;
einer Schließvorrichtung (6,39), die verstellbar ist zwischen einer Öffnungsstellung, in der die Abströmöffnung (13, 38) geöffnet und die Durchtrittsöffnung zumindest teilweise geschlossen ist, und einer Schließstellung, in der die Abströmöffnung (13, 38) geschlossen und die Durchtrittsöffnung geöffnet ist, und einer lösbaren Verriegelung (7, 17), die die Schließvorrichtung (6, 39) im Ruhezustand in der Öffnungsstellung lösbar verriegelt, wobei die lösbare Verriegelung (7, 17) mit einer Auslösevorrichtung gekoppelt ist, die bei Aktivierung der Airbaganordnung (1, 20, 80) bei einem Unfall in Abwesenheit einer OOP-Situation ein Lösen der Verriegelung bewirkt, und die Schließvorrichtung (6, 39) in die Schließstellung übergeht.

2. Airbaganordnung (1, 20, 80) nach Anspruch 1, wobei die Auslösevorrichtung (8, 16) zum Empfang eines Auslösesignals von einem Sensor zur Detektion einer OOP-Situation ausgebildet ist, welches dieser bei Aktivierung der Airbaganordnung (1, 20, 80) in Abwesenheit einer OOP-Situation erzeugt.

3. Airbaganordnung (1, 20, 80) nach Anspruch 1, wobei die Auslösevorrichtung (8, 16) durch ein Zugband (16) gebildet ist, das bei ordnungsgemäßer Entfaltung des Airbags (23) eine Zugkraft auf die lösbare Verriegelung (7, 17) ausübt, die ein Lösen der Verriegelung (7, 17) bewirkt.

4. Airbaganordnung (1, 20, 80) nach einem der vorhergehenden Ansprüche, wobei die lösbare Verriegelung (7, 17) einer auf die Schließvorrichtung (6, 39) wirkenden Vorspannkraft entgegenwirkt, durch die die Schließvorrichtung (6, 39) nach Entriegelung von der Öffnungsstellung in die Schließstellung bewegt wird.

5. Airbaganordnung (1, 20, 80) nach einem der vorhergehenden Ansprüche, wobei die Verriegelung (7, 17) durch ein Deformationselement (17) gebildet ist, dessen Deformation elektrisch steuerbar ist, das zum Empfang eines Steuersignals von einer Steuereinheit ausgebildet ist, welches diese bei Aktivierung der Airbaganordnung (1, 20, 80) in Abwesenheit einer OOP-Situation erzeugt, und wobei das Deformationselement (17) nach Empfang des Steuersignals durch Deformation eine Bewegung der Schließvorrichtung (6, 39) von der Öffnungsstellung in die Schließstellung zulässt oder bewirkt.

6. Airbaganordnung (1, 20, 80) nach Anspruch 5, wobei das Deformationselement (17) als Biegeblech ausgebildet ist.

7. Airbaganordnung (1, 20, 80) nach einem der vorhergehenden Ansprüche, wobei die Schließvorrichtung (6, 39) durch eine entlang einer Längsachse des Gehäuses zwischen der Öffnungsstellung und der Schließstellung verschieblichen Steuerschieber (6) gebildet ist, dessen Wandung eine erste Aussparung (11) aufweist, die in der Öffnungsstellung über der Abströmöffnung (13, 38) zu liegen kommt, so dass bei Aktivierung der Airbaganordnung (1, 20, 80) und dem Vorliegen einer OOP-Situation vom Gasgenerator (3, 26) erzeugtes Gas über die erste Aussparung (11) und die Abströmöffnung (13, 38) aus der Airbaganordnung (1, 20, 80) austritt.

8. Airbaganordnung (1, 20, 80) nach einem der vorhergehenden Ansprüche, wobei das Gehäuse eine Vorkammer (4) aufweist, zur zumindest teilweisen Aufnahme des Gasgenerators (3, 26), und eine Airbagkammer (2) zur Aufnahme des Airbags (23) im zusammengefalteten Zustand, wobei die Vorkammer (4) und die Airbagkammer (2) mittels der Durchtrittsöffnung (12, 34) verbunden sind, durch welche durch den Gasgenerator (3, 26) erzeugtes Gas von der Vorkammer (4) in die Airbagkammer (2) gelangen kann.

9. Airbaganordnung (1, 20, 80) nach den Ansprüchen 7 und 8, wobei der Steuerschieber (6) eine zweite Aussparung (10) aufweist, die in der Schließstellung über der Durchtrittsöffnung (12) zu liegen kommt, so dass bei Aktivierung der Airbaganordnung (1, 20, 80) und der Abwesenheit einer OOP-Situation vom Gasgenerator (3, 26) erzeugtes Gas über die zweite Aussparung (10) und die Durchtrittsöffnung (12, 34) in die Airbagkammer eintritt und der Airbag (23) ordnungsgemäß aufgeblasen wird.

10. Airbaganordnung (1, 20, 80) nach Anspruch 9, wobei die Abströmöffnung (13, 38) und die Durchtrittsöffnung (12, 34), als auch die erste und die zweite Aussparung (10,11) sich jeweils gegenüberliegen.

11. Airbaganordnung (1, 20, 80) nach Anspruch 9 oder 10, wobei die Abströmöffnung (13, 38) und die Durchtrittsöffnung (12, 34), als auch die erste und die zweite Aussparung (10, 11) jeweils entlang der Verschiebeachse des Steuerschiebers (6) zueinander versetzt sind.

12. Airbaganordnung (1, 20, 80) nach einem der Ansprüche 7 bis 11, wobei der Steuerschieber (6) einen im wesentlichen senkrecht zu dessen Verschieberichtung verlaufenden Vorsprung (14) aufweist, der eine Angriffsfläche für durch den Gasgenerator (3, 26) erzeugtes Gas bildet, wodurch bei Aktivierung der Airbaganordnung (1, 20, 80) eine Verschiebekraft in Richtung zur Schließstellung auf den Steuerschieber (6) ausgeübt wird.

13. Airbaganordnung (1, 20, 80) nach einem der Ansprüche 7 bis 12, wobei die Vorkammer (4) im wesentlichen zylindrisch ist, und der Steuerschieber (6) durch einen zylindrischen Kolben gebildet ist, der durch die Vorkammer (4) entlang dessen Längsachse gleitend geführt ist.

14. Airbaganordnung (1, 20, 80) nach Anspruch 13, wobei der Vorsprung (14) ringförmig ist und in den Innenraum des Kolbens weist.

15. Airbaganordnung (1, 20, 80) nach einem der Ansprüche 7 bis 14, wobei der Steuerschieber (6) mit einem Deformationselement (17) gekoppelt ist, das sich bei Verschiebung des Steuerschiebers (6) deformiert, um **dadurch** die Verschiebungsgeschwindigkeit und/oder Verschiebungsbeschleunigung des Steuerschiebers (6) zu steuern.

16. Airbaganordnung (1, 20, 80) nach einem der Ansprüche 7 bis 15, wobei die lösbare Verriegelung (7, 17) durch einen durch die Außenwände der Vorkammer (4) und des Steuerschiebers (6) verlaufenden Stift (7) gebildet ist, der den Steuerschieber (6) relativ zur Vorkammer (4) in der Öffnungsstellung fixiert.

17. Airbaganordnung (1, 20, 80) nach Anspruch 1, wobei die Schließvorrichtung (6, 39) mit einem Zugband (42) gekoppelt ist, das mit dem Airbag (23) verbunden ist, wobei bei einem ordnungsgemäßen Aufblasen des Airbags (23) das Zugband (42) gestrafft und durch das Zugband (42) eine Zugkraft auf die Schließvorrichtung (6, 39) ausgeübt wird, durch welche die Schließvorrichtung (6, 39) von der Öffnungsstellung in die Schließstellung bewegt wird.

18. Airbaganordnung (1, 20, 80) nach Anspruch 17, wobei das Gehäuse eine Vorkammer (29) zur Aufnahme zumindest eines Teiles des Gasgenerators (3, 26) und eine mit der Vorkammer (29) verbundene Airbagkammer (22) zur Aufnahme des gefalteten Airbags (23) aufweist, und die Schließvorrichtung (6, 39) als Schiebeelement (39) ausgebildet ist, das in der Vorkammer (29) in Richtung der Zugkraft verschiebbar geführt ist.

19. Airbaganordnung (1, 20, 80) nach Anspruch 18, wobei die Vorkammer (29) im wesentlichen kastenförmig ist und die Abströmöffnung (13, 38) in einer zur Zugkraftrichtung parallel verlaufenden Wand der Vorkammer (29) gebildet ist, und das Schiebeelement (39) eine Abdeckplatte aufweist, die die Abströmöffnung (13, 38) in der Schließstellung abdeckt.

20. Airbaganordnung (1, 20, 80) nach Anspruch 19, wobei das Schiebeelement (39) zwei zueinander parallel verlaufende Abdeckplatten (40) aufweist, die über zwei Bügel (41) miteinander verbunden sind, und das Zugseil (42) an den Bügeln (41) befestigt ist.

21. Airbaganordnung (1, 20, 80) nach einem der Ansprüche 17 bis 20, wobei an der Verbindungsstelle der Vorkammer (29) und der Airbagkammer (22) ein Diffusor (31) vorgesehen ist, der von der Vorkammer (29) in die Airbagkammer (22) strömende Luft seitlich in den Airbag (23) ablenkt.

22. Airbaganordnung (1, 20, 80) nach Anspruch 21, wobei der Diffusor (31) Haltebleche (32) ausweist, mittels derer der Airbag (23) am Gehäuse befestigt ist.

23. Airbaganordnung (1, 20, 80) nach Anspruch 22, wobei der Diffusor (31) eine Diffusorplatte aufweist, die im wesentlichen parallel zu den Halteblechen (32) und zu diesen entlang der Zugkraflrichtung versetzt verläuft.

24. Airbaganordnung (1, 20, 80) nach Ansprach 17, wobei das Gehäuse eine Vorkammer zur Aufnahme zumindest eines Teiles des Gasgenerators (3, 26) und eine mit der Vorkammer verbundene Airbagkammer zur Aufnahme des gefalteten Airbags (23) aufweist, und die Schließvorrichtung (6, 39) als faltbarer Gewebeschlauch ausgebildet ist, der in der Öffnungsstellung zusammengefaltet ist, und der durch die Zugkraft entfaltbar ist, um **dadurch** in die Schließstellung überzugehen.

25. Airbaganordnung (1, 20, 80) nach Anspruch 24, wobei der Gewebeschlauch und die Vorkammer zylinderförmig sind.

26. Airbaganordnung (1, 20, 80) nach Anspruch 24 oder 25, wobei der Gewebeschlauch durch eine oder mehrere Reißleinen im gefalteten Zustand gehalten wird, und die Reißleinen bei Überschreiten der Zugkraft eines vorbestimmten Wertes reißen und den Gewebeschlauch zur Entfaltung freigeben.

27. Airbaganordnung (1, 20, 80) nach einem der Ansprüche 24 bis 26, wobei die Abströmöffnung (13, 38) parallel zur Entfaltungsrichtung des Gewebeschlauches in der Außenwand der Vorkammer verläuft und durch Entfaltung des Gewebeschlauches abgedeckt wird.

## Claims

1. An airbag arrangement (1, 20, 80), having
an airbag (23);
a gas generator (3, 26) for producing gas to inflate the airbag (23);
a housing for accommodating the airbag (23) and/or at least part of the gas generator (3, 26);
at least one outlet opening (13, 38) in the housing for letting gas out of the airbag arrangement (1, 20, 80);
at least one passage opening in the housing, through which gas produced by the gas generator (3, 26) can pass into the airbag (23);
a closing device (6, 39) which can be adjusted between an open position, in which the outlet opening (13, 38) is open and the passage opening is at least partially closed, and a closed position, in which the outlet opening (13, 38) is closed and the passage opening is open, and
a releasable lock (7, 17) which releasably locks the closing device (6, 39) in the open position in the inoperative state, the releasable lock (7, 17) being coupled to a release device which brings about a release of the lock when the airbag arrangement (1, 20, 80) is activated in an accident in the absence of an OOP situation, and the closing device (6, 39) transferring into the closed position.

2. The airbag arrangement (1, 20, 80) as claimed in claim 1, the release device (8, 16) being designed to receive a release signal from a sensor for detecting an OOP situation, which sensor produces said signal when the airbag arrangement (1, 20, 80) is activated in the absence of an OOP situation.

3. The airbag arrangement (1, 20, 80) as claimed in claim 1, the release device (8, 16) being formed by a tension strap (16) which, when the airbag (23) is deployed correctly, exerts a tensile force on the releasable lock (7, 17), which brings about a release of the lock (7, 17).

4. The airbag arrangement (1, 20, 80) as claimed in one of the preceding claims, the releasable lock (7, 17) opposing a prestressing force which acts on the closing device (6, 39) and by means of which the closing device (6, 39) is moved after release from the open position into the closed position.

5. The airbag arrangement (1, 20, 80) as claimed in one of the preceding claims, the lock (7, 17) being formed by a deformation element (17), the deformation of which can be electrically controlled and which is designed to receive a control signal from a control unit which produces said signal when the airbag arrangement (1, 20, 80) is activated in the absence of an OOP situation, and the deformation element (17), after receiving the control signal, permitting or bringing about a movement of the closing device (6, 39) from the open position into the closed position by being deformed.

6. The airbag arrangement (1, 20, 80) as claimed in claim 5, the deformation element (17) being designed as a bending plate.

7. The airbag arrangement (1, 20, 80) as claimed in one of the preceding claims, the closing device (6, 39) being formed by a control slide (6) which can be displaced along a longitudinal axis of the housing between the open position and the closed position and the wall of which has a first cutout (11)
which, in the open position, comes to lie over the outlet opening (13, 38), so that, when the airbag arrangement (1, 20, 80) is activated and there is an OOP situation, gas produced by the gas generator (3, 26) exits from the airbag arrangement (1, 20, 80) via the first cutout (11) and the outlet opening (13, 38).

8. The airbag arrangement (1, 20, 80) as claimed in one of the preceding claims, the housing having an antechamber (4), for at least partially accommodating the gas generator (3, 26), and an airbag chamber (2) for accommodating the airbag (23) in the folded-up state, the antechamber (4) and the airbag chamber (2) being connected by means of the passage opening (12, 34) through which gas produced by the gas generator (3, 26) can pass from the antechamber (4) into the airbag chamber (2).

9. The airbag arrangement (1, 20, 80) as claimed in claims 7 and 8, the control slide (6) having a second cutout (10) which comes to lie over the passage opening (12) in the closed position, so that, when the airbag arrangement (1, 20, 80) is activated and an OOP situation is absent, gas produced by the gas generator (3, 26) enters into the airbag chamber via the second cutout (10) and the passage opening (12, 34) and the airbag (23) is correctly inflated.

10. The airbag arrangement (1, 20, 80) as claimed in claim 9, the outlet opening (13, 38) and the passage opening (12, 34) and also the first and second cutouts (10, 11) lying opposite each other in each case.

11. The airbag arrangement (1, 20, 80) as claimed in claim 9 or 10, the outlet opening (13, 38) and the passage opening (12, 34) and also the first and second cutouts (10, 11) being offset with respect to each other in each case along the axis of displacement of the control slide (6).

12. The airbag arrangement (1, 20, 80) as claimed in one of claims 7 to 11, the control slide (6) having a projection (14) which runs essentially perpendicularly with respect to its displacement direction and forms an application surface for gas produced by the gas generator (3, 26), as a result of which, when the airbag arrangement (1, 20, 80) is activated, a displacement force in the direction of the closed position is exerted on the control slide (6).

13. The airbag arrangement (1, 20, 80) as claimed in one of claims 7 to 12, the antechamber (4) being essentially cylindrical, and the control slide (6) being formed by a cylindrical piston which is guided in a sliding manner through the antechamber (4) along its longitudinal axis.

14. The airbag arrangement (1, 20, 80) as claimed in claim 13, the projection (14) being annular and pointing into the interior of the piston.

15. The airbag arrangement (1, 20, 80) as claimed in one of claims 7 to 14, the control slide (6) being coupled to a deformation element (17) which becomes deformed during displacement of the control slide (6) in order thereby to control the displacement speed and/or the displacement acceleration of the control slide (6).

16. The airbag arrangement (1, 20, 80) as claimed in one of claims 7 to 15, the releasable lock (7, 17) being formed by a pin (7) which runs through the outer walls of the antechamber (4) and the control slide (6) and fixes the control slide (6) relative to the antechamber (4) in the open position.

17. The airbag arrangement (1, 20, 80) as claimed in claim 1, the closing device (6, 39) being coupled to a tension strap (42) which is connected to the airbag (23), the tension strap (42) being tightened, when the airbag (23) is correctly inflated, and the tension strap (42) exerting a tensile force on the closing device (6, 39), by means of which the closing device (6, 39) is moved from the open position into the closed position.

18. The airbag arrangement (1, 20, 80) as claimed in claim 17, the housing having an antechamber (29), for accommodating at least part of the gas generator (3, 26), and an airbag chamber (22), which is connected to the antechamber (29) and is used for accommodating the folded airbag (23), and the closing device (6, 39) being designed as a sliding element (39) which is guided displaceably in the antechamber (29) in the direction of the tensile force.

19. The airbag arrangement (1, 20, 80) as claimed in claim 18, the antechamber (29) being essentially box-shaped and the outlet opening (13, 38) being formed in a wall of the antechamber (29) running parallel to the direction of tensile force, and the sliding element (39) having a covering plate which covers the outlet opening (13, 38) in the closed position.

20. The airbag arrangement (1, 20, 80) as claimed in claim 19, the sliding element (39) having two covering plates (40) which run parallel to each other and are connected to each other via two clips (41), and the tension cable (42) being fastened to the clips (41).

21. The airbag arrangement (1, 20, 80) as claimed in one of claims 17 to 20, a diffuser (31) being provided at the connecting point of the antechamber (29) and the airbag chamber (22) and deflecting air which is flowing from the antechamber (29) into the airbag chamber (22) laterally into the airbag (23).

22. The airbag arrangement (1, 20, 80) as claimed in claim 21, the diffuser (31) having retaining plates (32) by means of which the airbag (23) is fastened to the housing.

23. The airbag arrangement (1, 20, 80) as claimed in claim 22, the diffuser (31) having a diffuser plate which runs essentially parallel to the retaining plates (32) and is offset with respect to them along the direction of the tensile force.

24. The airbag arrangement (1, 20, 80) as claimed in claim 17, the housing having an antechamber, for accommodating at least part of the gas generator (3, 26), and an airbag chamber, which is connected to the antechamber and is used for accommodating the folded airbag (23), and the closing device (6, 39) being designed as a foldable fabric hose, which is folded up in the open position and which can be deployed by the tensile force in order, as a result, to transfer into the closed position.

25. The airbag arrangement (1, 20, 80) as claimed in claim 24, the fabric hose and the antechamber being cylindrical.

26. The airbag arrangement (1, 20, 80) as claimed in claim 24 or 25, the fabric hose being retained in the folded state by one or more rip cords, and, when the tensile force exceeds a predetermined value, the rip cords ripping and opening up the fabric hose for deployment.

27. The airbag arrangement (1, 20, 80) as claimed in one of claims 24 to 26, the outlet opening (13, 38) running in the outer wall of the antechamber parallel to the direction of deployment of the fabric hose and being covered by deployment of the fabric hose.

## Revendications

1. Système d'airbag (1, 20, 80), comprenant
un airbag (23) ;
un générateur de gaz (3, 26) destiné à générer du gaz pour gonfler l'airbag (23) ;
un logement destiné à recevoir l'airbag (23) et/ou au moins une partie du générateur de gaz (3, 26) ;
au moins un orifice d'écoulement (13, 38) dans le logement destiné à évacuer le gaz du système d'airbag (1, 20, 80) ;
au moins un orifice de passage dans le logement, à travers lequel le gaz généré par le générateur de gaz (3, 26) peut parvenir à l'airbag (23) ;
un dispositif de fermeture (6, 39) qui est réglable entre une position ouverte, dans laquelle l'orifice d'écoulement (13, 38) est ouvert et l'orifice de passage est au moins en partie fermé, et une position fermée, dans laquelle l'orifice d'écoulement (13, 38) est fermé et l'orifice de passage est ouvert, et un verrouillage desserrable (7, 17), qui verrouille de façon desserrable le dispositif de fermeture (6, 39) à l'état de repos dans la position ouverte, le verrouillage desserrable (7, 17) étant couplé à un dispositif de déclenchement, qui, à l'activation du système d'airbag (1, 20, 80), lorsqu'un accident se produit en l'absence d'une situation dans laquelle un passager est en position proche d'un module d'airbag, desserre le verrouillage, et le dispositif de fermeture (6, 39) passe en position fermée.

2. Système d'airbag (1, 20, 80) selon la revendication 1, le dispositif de déclenchement (8, 16) étant conçu pour recevoir un signal de déclenchement provenant d'un capteur destiné à détecter une situation dans laquelle un passager est en position proche du module d'airbag, que celui-ci génère à l'activation du système d'airbag (1, 20, 80) en l'absence d'une situation dans laquelle un passager est en position proche d'un module d'airbag.

3. Système d'airbag (1, 20, 80) selon la revendication 1, le dispositif de déclenchement (8, 16) étant formé par une bande de traction (16), qui, lorsque l'airbag (23) se déploie en bonne et due forme, exerce sur le verrouillage desserrable (7, 17) une force de traction qui desserre le verrouillage (7, 17).

4. Système d'airbag (1, 20, 80) selon l'une quelconque des revendications précédentes, le verrouillage desserrable (7, 17) contrecarrant une force de précontrainte agissant sur le dispositif de fermeture (3, 39), force par laquelle, après le déverrouillage, le dispositif de fermeture (6, 39) est déplacé de la position fermée à la position ouverte.

5. Système d'airbag (1, 20, 80) selon l'une quelconque des revendications précédentes, le verrouillage (7, 17) étant formé par un élément de déformation (17), dont la déformation peut être commandée électriquement, qui est conçu pour recevoir un signal de commande provenant d'une unité de commande, lequel génère ladite déformation à l'activation du système d'airbag (1, 20, 80) en l'absence d'une situation dans laquelle un passager est en position proche d'un module d'airbag, et l'élément de déformation (17), après avoir reçu le signal de commande, autorise ou provoque par la déformation un déplacement du dispositif de fermeture (6, 39) de la position ouverte à la position fermée.

6. Système d'airbag (1, 20, 80) selon la revendication 5, l'élément de déformation (17) étant conçu comme une tôle flexible.

7. Système d'airbag (1, 20, 80) selon l'une quelconque des revendications précédentes, dans lequel le dispositif de fermeture (6, 39) est formé par un tiroir de commande (6) mobile le long d'un axe longitudinal du logement entre la position ouverte et la position fermée, tiroir dont la paroi comprend un premier évidement (11), qui, dans la position ouverte, vient se situer au-dessus de l'orifice d'écoulement (13, 38), de sorte qu'à l'activation du système d'airbag (1, 20, 80) et en présence d'une situation dans laquelle un passager est en position proche d'un module d'airbag, le gaz généré par le générateur de gaz (3, 26) s'échappe du système d'airbag (1, 20, 80) par le premier évidement (11) et l'orifice d'écoulement (13, 38).

8. Système d'airbag (1, 20, 80) selon l'une quelconque des revendications précédentes, le logement comprenant une antichambre (4) destinée à recevoir au moins en partie le générateur de gaz (3, 26), et une chambre d'airbag (2) destinée à recevoir l'airbag (23) à l'état replié, l'antichambre (4) et la chambre d'airbag (2) étant reliées par l'orifice de passage (12, 34), à travers lequel le gaz généré par le générateur de gaz (3, 26) peut parvenir de l'antichambre (4) à la chambre d'airbag (2).

9. Système d'airbag (1, 20, 80) selon l'une quelconque des revendications 7 et 8, le tiroir de commande (6) comprenant un second évidement (10), qui, dans la position fermée, vient se situer au-dessus de l'orifice de passage (12), de sorte qu'à l'activation du système d'airbag (1, 20, 80) et en l'absence d'une situation dans laquelle un passager est en position proche d'un module d'airbag, le gaz généré par le générateur de gaz (3, 26) pénètre par le second évidement (10) et l'orifice de passage (12, 34) dans la chambre d'airbag et l'airbag (23) est gonflé en bonne et due forme.

10. Système d'airbag (1, 20, 80) selon la revendication 9, l'orifice d'écoulement (13, 38) et l'orifice de passage (12, 34), ainsi que le premier et le second évidements (10, 11) étant respectivement opposés.

11. Système d'airbag (1, 20, 80) selon la revendication 9 ou 10, l'orifice d'écoulement (13, 38) et l'orifice de passage (12, 34), ainsi que le premier et le second évidements (10, 11) étant respectivement décalés les uns par rapport aux autres le long de l'axe de déplacement du tiroir de commande (6).

12. Système d'airbag (1, 20, 80) selon l'une quelconque des revendications 7 à 11, le tiroir de commande (6) comprenant une saillie (17) s'étendant sensiblement perpendiculairement à sa direction de déplacement, laquelle saillie forme une surface d'attaque pour le gaz généré par le générateur de gaz (3, 26), sachant que, à l'activation du système d'airbag (1, 20, 80), une force de déplacement est exercée sur le tiroir de commande (6) en direction de la position fermée.

13. Système d'airbag (1, 20, 80) selon l'une quelconque des revendications 7 à 12, l'antichambre (4) étant sensiblement cylindrique, et le tiroir de commande (6) étant formé par un piston cylindrique, qui est guidé de façon coulissante le long de son axe longitudinal à travers l'antichambre (4).

14. Système d'airbag (1, 20, 80) selon la revendication 13, la saillie (14) étant de forme annulaire et étant orientée dans l'espace intérieur du piston.

15. Système d'airbag (1, 20, 80) selon l'une quelconque des revendications 7 à 14, le tiroir de commande (6) étant couplé à un élément de déformation (17), qui se déforme à l'occasion du déplacement du tiroir de commande (6), et pour commander de ce fait la vitesse de déplacement et/ou l'accélération de déplacement du tiroir de commande (6).

16. Système d'airbag (1, 20, 80) selon l'une quelconque des revendications 7 à 15, le verrouillage desserrable (7, 17) étant formé par une broche (7) s'étendant à travers les parois extérieures de l'antichambre (4) et du tiroir de commande (6), laquelle broche fixe le tiroir de commande (6) dans la position ouverte par rapport à l'antichambre (4).

17. Système d'airbag (1, 20, 80) selon la revendication 1, le dispositif de fermeture (6, 39) étant couplé à une bande de traction (42), qui est reliée à l'airbag (23), sachant que, lorsque l'airbag (23) est gonflé en bonne et due forme, la bande de traction (42) est tendue et une force de traction est exercée par la bande de traction (42) sur le dispositif de fermeture (6, 39), force par laquelle le dispositif de fermeture (6, 39) est déplacé de la position ouverte à la position fermée.

18. Système d'airbag (1, 20, 80) selon la revendication 17, le logement comprenant une antichambre (29) destinée à recevoir au moins une partie du générateur de gaz (3, 26) et une chambre d'airbag (22) reliée à l'antichambre (29) destinée à recevoir l'airbag (23) plié, et le dispositif de fermeture (6, 39) est conçu comme un élément coulissant (39) qui est guidé de façon mobile dans l'antichambre (29) en direction de la force de traction.

19. Système d'airbag (1, 20, 80) selon la revendication 18, l'antichambre (29) étant sensiblement en forme de caisse et l'orifice d'écoulement (13, 38) étant formé dans une paroi de l'antichambre (29) s'étendant parallèlement à la direction de la force de traction, et l'élément coulissant (39) comprenant une plaque de recouvrement qui recouvre l'orifice d'écoulement (13, 38) dans la position fermée.

20. Système d'airbag (1, 20, 80) selon la revendication 19, l'élément coulissant (39) comprenant deux plaques de recouvrement (40) s'étendant parallèlement l'une à l'autre qui sont reliées l'une à l'autre par deux étriers (41), et la corde de traction (42) est fixée aux étriers (41).

21. Système d'airbag (1, 20, 80) selon l'une quelconque des revendications 17 à 20, un diffuseur (31) étant prévu au point de raccordement de l'antichambre (29) et de la chambre d'airbag (22), lequel diffuseur dévie latéralement dans l'airbag (23) l'air circulant de l'antichambre (29) à la chambre d'airbag (22).

22. Système d'airbag (1, 20, 80) selon la revendication 21, le diffuseur (31) comprenant des tôles de fixation (32), au moyen desquelles l'airbag (23) est fixé au logement.

23. Système d'airbag (1, 20, 80) selon la revendication 22, le diffuseur (31) comprenant une plaque de diffuseur qui s'étend sensiblement parallèlement aux tôles de fixation (32) et de façon décalée par rapport à celles-ci le long de la direction de la force de traction.

24. Système d'airbag (1, 20, 80) selon la revendication 17, le logement comprenant une antichambre destinée à recevoir au moins une partie du générateur de gaz (3, 26) et une chambre d'airbag reliée à l'antichambre, destinée à recevoir l'airbag (23) plié, et le dispositif de fermeture (6, 39) est conçu comme un tuyau tissé pliable, qui est replié dans la position ouverte, et qui peut être déployé par la force de traction, afin de passer de ce fait dans la position fermée.

25. Système d'airbag (1, 20, 80) selon la revendication 24, le tuyau tissé et l'antichambre étant de forme cylindrique.

26. Système d'airbag (1, 20, 80) selon la revendication 24 ou 25, le tuyau tissé étant maintenu dans l'état plié par une ou plusieurs corde(s) de déchirure, et les cordes de déchirure se déchirant d'une valeur prédéfinie lorsque la force de traction est dépassée et libérant le tuyau tissé pour qu'il se déploie.

27. Système d'airbag (1, 20, 80) selon l'une quelconque des revendications 24 à 26, l'orifice d'écoulement (13, 38) s'étendant parallèlement à la direction de déploiement du tuyau tissé dans la paroi extérieure de l'antichambre et étant recouvert par le déploiement du tuyau tissé.
